# EUROPÄISCHE PATENTANMELDUNG

(11) **EP 3 279 231 A1**
(43) Veröffentlichungstag der Anmeldung: **07.02.2018**
(21) Anmeldenummer: 16182609.4
(22) Anmeldetag: 03.08.2016
(51) Int. Cl.: C08G 18/69, C08G 18/79, C08G 18/20, C08G 18/22, C08G 18/32, C08G 18/42, C09J 175/04

(54) **ZWEIKOMPONENTIGER POLYURETHANKLEBSTOFF MIT WEITGEHEND TEMPERATURABHÄNGIGEN MECHANISCHEN EIGENSCHAFTEN UND HOHER FESTIGKEIT**

(71) Anmelder: Sika Technology AG, 6340 Baar (CH)
(72) Erfinder: Kelch, Steffen, 8102 Oberengstringen (CH); Burckhardt, Urs, 8049 Zürich (CH)
(74) Vertreter: Sika Patent Attorneys

(57) **Zusammenfassung**

Die vorliegende Erfindung betrifft eine zweikomponentige Polyurethanzusammensetzung enthaltend mindestens 55 Gewichts-% Polybutadienpolyole bezogen auf die Gesamtmenge aller Polyole mit einem mittleren Molekulargewicht von mindestens 500 g/mol, und mindestens einen latenten Härter, wobei das Verhältnis der Anzahl Reaktivgruppen des latenten Härters zur Anzahl der vorhandenen OH-Gruppen im Bereich von 0.02 bis 0.4 liegt.

Die Zusammensetzung verfügt über eine lange Offenzeit, eine blasenfreie Aushärtung, eine sehr tiefe Glasübergangstemperatur, eine hohe Elastizität und eine überraschend hohe Festigkeit, welche über einen weiten Temperaturbereich sehr konstant sind. Weiterhin haftet sie sehr gut auf metallischen und nichtmetallischen Substraten, wobei sie auf glasigen thermoplastischen Kunststoffen kaum Spannungsrisse verursacht. Sie ist somit hervorragend geeignet als struktureller elastischer Klebstoff für Verklebungen, welche in einem breiten Temperaturbereich beansprucht werden.

## Beschreibung

### Technisches Gebiet

Die Erfindung betrifft das Gebiet der elastischen zweikomponentigen Polyurethanklebstoffe.

### Stand der Technik

Strukturelle Klebstoffe basierend auf Polyurethanen werden in der Fertigungsindustrie häufig verwendet, insbesondere als Konstruktions- und Montageklebstoffe, um Bauteile derart miteinander zu verkleben, dass der Klebeverbund Teil einer dauerhaft belastbaren Konstruktion ist. Solche Klebstoffe sind typischerweise elastisch und müssen hohe Ansprüche in Bezug auf ihre Verarbeitbarkeit, Festigkeit und Anhaftungskräfte erfüllen.

Ein solcher Klebstoff sollte gut verarbeitbar und in höheren Schichtdicken bis zu 10 mm und mehr verwendbar sein, und sowohl bei Umgebungstemperatur als auch in einem durch Wärme beschleunigten Aushärtungsprozess defektfrei zur Endfestigkeit aushärten. Weiterhin sollte er eine gute Haftung zu mit Lack beschichteten metallischen Substraten und Substraten mit geringer Oberflächenenergie aufbauen. Schliesslich sollte der Klebstoff im Bereich seiner Gebrauchstemperatur, welche üblicherweise im Bereich von etwa -40 bis 90 °C liegt, ein möglichst einheitliches mechanisches Verhalten zeigen, ohne sprunghafte Änderungen in Festigkeit und Elastizitätsmodul bei Temperaturwechseln. Für solche Anwendungen ist der Einsatz von zweikomponentigen Polyurethanklebstoffen auf der Basis von hydrophoben Polyolen, insbesondere Polybutadienpolyolen, bekannt. Solche Klebstoffe weisen in der Regel eine geringe Wasseraufnahme auf, neigen kaum zu Blasenbildung bei der Aushärtung und zeigen eine gute Alterungsbeständigkeit. Zudem ist der Haftungsaufbau auf niederenergetischen Oberflächen wie Polyolefinen oder Polycarbonaten meist gut. Weiterhin verfügen solche Klebstoffe typischerweise über eine für zweikomponentige Polyurethane sehr tiefe Glasübergangstemperatur unterhalb von -45 °C, was ein sehr einheitliches mechanisches Verhalten in einem breiten Temperaturbereich ermöglicht. Für viele Anwendungen ist ihre mechanische Festigkeit aber ungenügend. Sie zu erhöhen, ohne das günstige Temperaturverhalten zu beeinträchtigen, wäre wünschenswert. Typischerweise wird beim Einbau von Hartsegmenten, beispielsweise durch Mitverwendung von Kettenverlängerern wie Butandiol oder Aminhärtern, die Glasübergangstemperatur erhöht und/oder es werden im ausgehärteten Material zwei oder mehr Glasübergangstemperaturen beobachtet, was eine unerwünscht starke Änderung des mechanischen Verhaltens im Bereich der Gebrauchstemperatur zur Folge hat. Zudem wird dabei oft auch die Verarbeitungszeit des Klebstoffs unerwünscht stark verkürzt.

Ein weiterer Vorteil von zweikomponentigen Polyurethanklebstoffen auf der Basis von Polybutadienpolyolen besteht darin, dass diese ohne Mitverwendung von Weichmachern formuliert werden können, so dass eine Migration der Weichmacher aus dem Klebstoff, beispielsweise in angrenzende Substrate, die zu einer Verschlechterung der Klebeeigenschaften führen kann, vermieden wird. Dies ist insbesondere beim Verkleben von glasigen thermoplastischen Kunststoffen wie Polycarbonat, Polymethylmethacrylat oder Polystyrol von Vorteil, wo Weichmachermigration aus dem Klebstoff in das Substrat zum Auftreten von Spannungsrissen im Substrat führen kann. Dieses Phänomen wird auch als "environmental stress cracking" bezeichnet.

In WO2014/040922 werden zweikomponentige Polyurethanklebstoffe enthaltend mindestens ein Polyol, mindestens ein Polyisocyanat und mindestens ein blockiertes Amin beschrieben, welche mit Bismut(III) oder Zirkonium(IV)-Katalysatoren aushärten. Bevorzugt liegt das blockierte Amin in einer solchen Menge vor, dass das Verhältnis der Anzahl seiner Reaktivgruppen in Bezug auf die Anzahl OH-Gruppen im Bereich von 0.1 bis 1 liegt. Die Beispiele sind mit einem Verhältnis in der Nähe von 0.5 ausgeführt. Die mechanischen Eigenschaften der ausgeführten Zusammensetzungen liegen nicht in der Nähe der hier beschriebenen vorteilhaften Eigenschaften. Insbesondere weisen die offenbarten Zusammensetzungen keine Glasübergangstemperaturen unterhalb von -45 °C auf. Es gibt keine Hinweise in dieser Schrift, auf welche Weise ein Material mit den geforderten Eigenschaften erhalten werden kann.

### Darstellung der Erfindung

Aufgabe der vorliegenden Erfindung ist es daher, eine zweikomponentige Polyurethanzusammensetzungen zur Verfügung zu stellen, welche gut verarbeitbar ist, schnell und blasenfrei zu einem elastischen Material mit einer sehr niedrigen Glasübergangstemperatur, bevorzugt unterhalb von -45 °C, insbesondere unterhalb von -50 °C, aushärtet und dabei eine hohe Festigkeit aufweist, in einem breiten Temperaturbereich über möglichst gleichbleibende mechanische Eigenschaften und über gute Haftungseigenschaften verfügt. Überraschenderweise wird diese Aufgabe mit der in Anspruch 1 beschriebenen Zusammensetzung gelöst. Diese enthält eine Kombination aus Polybutadienpolyol und latentem Härter, wobei der latente Härter nur in einer ausgewählten, sehr geringen Menge vorhanden ist. Überraschenderweise zeigt die erfindungsgemässe Zusammensetzungen eine deutlich erhöhte Festigkeit im Vergleich mit einer Zusammensetzung ohne latenten Härter, bei gleichbleibend tiefer Glasübergangstemperatur und gleichbleibend sehr konstantem mechanischem Verhalten über einen weiten Temperaturbereich. Bei Erhöhung des Gehalts an latentem Härter über den erfindungsgemässen Bereich hinaus wird hingegen eine deutliche Verschlechterung der mechanischen Eigenschaften beobachtet.

Weiterhin überraschend ist der Umstand, dass die erfindungsgemässe Zusammensetzung kaum Spannungsrissbildung in glasigen thermoplastischen Kunststoffen wie Polycarbonat verursacht, obwohl man erwarten würde, dass bei der Aushärtung aus dem latenten Härter freigesetzte Aldehyde oder Ketone solche auslösen.

Besonders überraschend ist weiterhin, dass bei der Verwendung von DABCO als Katalysator die Neigung zu Spannungsrissbildung im Substrat besonders gering ist und die mechanischen Eigenschaften der Zusammensetzung besonders gut sind, während in WO2014/040922 mit DABCO als Katalysator deutlich reduzierte Festigkeiten und Dehnbarkeiten beobachtet wurden. Weiterhin wurde festgestellt, dass die erfindungsgemässe Zusammensetzung überraschend robust ist in Bezug auf Aushärtung bei hohen Temperaturen, insbesondere im Bereich von 60 bis 130 °C, wo auch bei solchen Aushärtungsbedingungen Materialien von hoher Qualität erhalten werden. Somit kann die Aushärtungszeit einer Verklebung durch Applikation von Wärme verkürzt werden, was in der industriellen Fertigung vorteilhaft ist.

Die beschriebene Zusammensetzung verfügt über sehr vorteilhafte Eigenschaften. Sie hat eine lange Offenzeit und ist somit in der Praxis gut handhabbar. Die Aushärtung verläuft blasenfrei, auch unter ungünstigen klimatischen Bedingungen wie hohe Luftfeuchtigkeit und bei beschleunigter Aushärtung mittels Wärme. Sie weist eine hohe Elastizität, eine überraschend hohe Festigkeit und eine sehr tiefe Glasübergangstemperatur auf, wobei die mechanischen Eigenschaften in einem breiten Temperaturbereich von etwa -40 bis 90 °C sehr konstant sind. Weiterhin haftet sie sehr gut auf metallischen und nichtmetallischen Substraten, wobei in Kontakt mit glasigen thermoplastischen Kunststoffen kaum Spannungsrisse entstehen. Sie ist somit hervorragend geeignet als struktureller elastischer Klebstoff für Verklebungen, welche in einem breiten Temperaturbereich beansprucht werden.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine Zusammensetzung bestehend aus
- einer ersten Komponente enthaltend mindestens 55 Gewichts-% Polybutadienpolyole mit einem mittleren Molekulargewicht im Bereich von 2'000 bis 10'000 g/mol und einer mittleren OH-Funktionalität im Bereich von 2.1 bis 4 bezogen auf die Gesamtmenge aller Polyole mit einem mittleren Molekulargewicht von mindestens 500 g/mol, und
- einer zweiten Komponente enthaltend mindestens ein Polyisocyanat, wobei mindestens eine der beiden Komponenten zusätzlich mindestens einen latenten Härter enthält,
dadurch gekennzeichnet, dass das Verhältnis der Anzahl Reaktivgruppen des latenten Härters zur Anzahl der vorhandenen OH-Gruppen im Bereich von 0.02 bis 0.4 liegt.

Als "latenter Härter" wird im vorliegenden Dokument eine Substanz mit mindestens zwei gegenüber Isocyanaten reaktiven Gruppen, von denen mindestens eine in ihrer Reaktivität blockiert und mittels Feuchtigkeit aktivierbar ist, bezeichnet.

Als "Reaktivgruppen des latenten Härters" werden alle gegenüber Isocyanatgruppen reaktiven Gruppen des latenten Härters nach dessen Aktivierung mittels Feuchtigkeit bezeichnet.

Unter "Molekulargewicht" versteht man im vorliegenden Dokument die molare Masse (in Gramm pro Mol) eines Moleküls. Als "mittleres Molekulargewicht" wird das Zahlenmittel Mₙ einer oligomeren oder polymeren Mischung von Molekülen bezeichnet, welches üblicherweise mittels Gelpermeationschromatographie (GPC) gegen Polystyrol als Standard bestimmt wird.

Als "Polyol mit einem mittleren Molekulargewicht von mindestens 500 g/mol" wird ein technisches Gemisch von OH-funktionellen Substanzen mit einer mittleren OH-Funktionalität von mindestens 1.5 und einem mittleren Molekulargewicht von mindestens 500 g/mol bezeichnet.

Mit "Poly" beginnende Substanznamen wie Polyisocyanat oder Polyamin bezeichnen Substanzen, die formal zwei oder mehr der in ihrem Namen vorkommenden funktionellen Gruppen pro Molekül enthalten.

Als "primäre Hydroxylgruppe" wird eine OH-Gruppe bezeichnet, welche an ein C-Atom mit zwei Wasserstoffen gebunden ist.

Als "primäre Aminogruppe" wird eine Aminogruppe bezeichnet, die an einen einzigen organischen Rest gebunden ist und zwei Wasserstoffatome trägt; als "sekundäre Aminogruppe" wird eine Aminogruppe bezeichnet, die an zwei organische Reste, welche auch gemeinsam Teil eines Rings sein können, gebunden ist und ein Wasserstoffatom trägt; und als "tertiäre Aminogruppe" wird eine Aminogruppe bezeichnet, die an drei organische Reste, welche auch zu zweit oder zu dritt Teil eines oder mehrerer Ringe sein können, gebunden ist und kein Wasserstoffatom trägt.

Als "Oxazolidinogruppe" werden im vorliegenden Dokument sowohl Tetrahydrooxazolgruppen (5-Ring) als auch Tetrahydrooxazingruppen (6-Ring) bezeichnet.

Als "Offenzeit" wird in diesem Dokument die Zeit bezeichnet, innerhalb welcher die zu verklebenden Teile gefügt sein müssen, nachdem die Komponenten der Zusammensetzung vermischt sind.

Der Begriff "Festigkeit" bezeichnet im vorliegenden Dokument die Festigkeit der ausgehärteten Zusammensetzung, wobei mit Festigkeit insbesondere das Elastizitätsmodul (E-Modul), insbesondere im Dehnungsbereich von 0.5 bis 5%, gemeint ist.

Als "lagerstabil" oder "lagerfähig" wird eine Substanz oder eine Zusammensetzung bezeichnet, wenn sie bei Raumtemperatur in einem geeigneten Gebinde während längerer Zeit, typischerweise mindestens drei bis zu sechs Monaten und mehr, aufbewahrt werden kann, ohne dass sie sich in ihren Anwendungs- oder Gebrauchseigenschaften durch die Lagerung in einem für ihren Gebrauch relevanten Ausmass verändert.

Als "Raumtemperatur" wird eine Temperatur von ca. 23 °C bezeichnet.

Eine gestrichelte Linie in den Formeln in diesem Dokument stellt jeweils die

Bindung zwischen einem Substituenten und dem zugehörigen Molekülrest dar.

Die beiden Komponenten der Zusammensetzung werden getrennt voneinander hergestellt und in separaten feuchtigkeitsdichten Gebinden gelagert, bis sie zur Anwendung kurz vor oder während der Applikation miteinander vermischt werden und die Zusammensetzung schliesslich aushärtet.

Die erste Komponente der Zusammensetzung enthält mindestens ein Polybutadienpolyol mit einem mittleren Molekulargewicht im Bereich von 2'000 bis 10'000 g/mol und einer mittleren OH-Funktionalität im Bereich von 2.1 bis 4. Das mittlere Molekulargewicht des Polybutadienpolyols liegt bevorzugt im Bereich von 2'000 bis 4'000 g/mol, insbesondere im Bereich von 2'500 bis 3'000 g/mol. Eine solche Zusammensetzung verfügt über eine besonders hohe Festigkeit.

Die mittlere OH-Funktionalität des Polybutadienpolyols liegt bevorzugt im Bereich von 2.1 bis 2.9, insbesondere im Bereich von 2.3 bis 2.7.

Ein solches Polybutadienpolyol ermöglicht Zusammensetzungen mit besonders hoher Dehnung.

Ein geeignetes Polybutadienpolyol ist insbesondere erhältlich durch Polymerisation von 1,3-Butadien und Allylalkohol in einem geeigneten Verhältnis oder durch Oxidation von geeigneten Polybutadienen.

Ein geeignetes Polybutadienpolyol enthält insbesondere Strukturelemente der Formel (I) und gegebenenfalls Strukturelemente der Formel (II) oder (III). 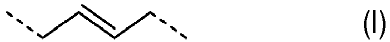 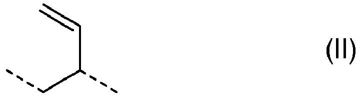 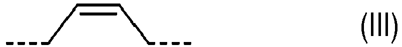 Ein bevorzugtes Polybutadienpolyol enthält 40 bis 80 %, insbesondere 55 bis 65 % des Strukturelements der Formel (I), 0 bis 30 %, insbesondere 15 bis 25 %, des Strukturelements der Formel (II), 0 bis 30 %, insbesondere 15 bis 25 %, des Strukturelements der Formel (III).

Ein besonders geeignetes Polybutadienpolyol ist Poly bd^{®} R-45HTLO oder Poly bd^{®} R-45M (beide von Cray Valley).

Die erste Komponente enthält mindestens 55 Gewichts-% Polybutadienpolyole bezogen auf die Gesamtmenge aller Polyole mit einem mittleren Molekulargewicht von mindestens 500 g/mol.

Bevorzugt enthält die erste Komponente mindestens 65 Gewichts-%, besonders bevorzugt mindestens 80 Gewichts-%, insbesondere mindestens 85 Gewichts-%, Polybutadienpolyole bezogen auf die Gesamtmenge aller Polyole mit einem mittleren Molekulargewicht von mindestens 500 g/mol. Ein hoher Gehalt an Polybutadienpolyolen ermöglicht eine besonders tiefe Glasübergangstemperatur und besonders konstante mechanische Eigenschaften in einem Temperaturbereich von etwa -40 bis 90 °C.

Die zweite Komponente der Zusammensetzung enthält mindestens ein Polyisocyanat.

Das Polyisocyanat ist insbesondere ein monomeres Diisocyanat, oder ein Oligomer oder ein Polymer oder ein Derivat eines monomeren Diiisocyanats, oder eine beliebige Mischung davon. Unter Oligomeren und Polymeren werden hierbei Homopolymere und -oligomere verstanden, die ausschließlich aus Di- oder Triisocyanatbestandteilen bestehen.

Geeignete aromatische monomere Diisocyanate sind insbesondere 2,4- oder 2,6-Toluylendiisocyanat oder beliebige Gemische dieser Isomeren (TDI), 4,4'-, 2,4'- oder 2,2'-Diphenylmethandiisocyanat oder beliebige Gemische dieser Isomeren (MDI), Gemische aus MDI und MDI-Homologen (polymeres MDI oder PMDI), 1,3- oder 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI) oder Dianisidindiisocyanat (DADI).
Davon bevorzugt ist MDI und TDI, insbesondere MDI.

Geeignete aliphatische monomere Diisocyanate sind insbesondere 1,4-Tetramethylendiisocyanat, 2-Methylpentamethylen-1,5-diisocyanat, 1,6-Hexamethylendiisocyanat (HDI), 2,2(4),4-Trimethyl-1,6-hexamethylendiisocyanat (TMDI), 1,10-Decamethylendiisocyanat, 1,12-Dodecamethylendiisocyanat, Lysin- oder Lysinesterdiisocyanat, Cyclohexan-1,3- oder -1,4-diisocyanat, 1-Methyl-2,4-oder -2,6-diisocyanatocyclohexan oder beliebige Gemische dieser Isomeren (HTDI oder H₆TDI), 1-Isocyanato-3,3,5-trimethyl-5-isocyanatomethyl-cyclohexan (Isophorondiisocyanat oder IPDI), Perhydro-2,4'- oder -4,4'-diphenylmethandiisocyanat (HMDI oder H₁₂MDI), 1,4-Diisocyanato-2,2,6-trimethylcyclohexan (TMCDI), 1,3- oder 1,4-Bis-(isocyanatomethyl)cyclohexan, m- oder p-Xylylendiisocyanat (m- oder p-XDI), m- oder p-Tetramethyl-1,3- oder -1,4-xylylendiisocyanat (m- oder p-TMXDI) oder Bis-(1-Isocyanato-1-methylethyl)-naphthalin.
Davon bevorzugt ist IPDI.

Geeignete Oligomere, Polymere oder Derivate von monomeren Diisocyanaten sind insbesondere abgeleitet von MDI, TDI, HDI oder IPDI.

Bevorzugt enthält das Polyisocyanat 4,4'- oder 2,4'- oder 2,2'-Diphenylmethandiisocyanat oder ein beliebiges Gemisch dieser Isomeren (MDI).

Bevorzugt ist das Polyisocyanat MDI oder eine Mischung aus MDI und MDI-Homologen (polymeres MDI oder PMDI) oder eine Mischung aus MDI und davon abgeleiteten Oligomeren, Polymeren oder Derivaten.

Besonders bevorzugt ist das Polyisocyanat eine bei Raumtemperatur flüssige Form von MDI, welche insbesondere einen hohen Gehalt an 4,4'-Diphenylmethandiisocyanat aufweist. Das sogenannte "flüssige MDI" stellt insbesondere entweder durch partielle chemische Modifizierung - insbesondere Carbodiimidisierung bzw. Uretoniminbildung - verflüssigtes 4,4'-Diphenylmethandiisocyanat dar, oder es ist ein durch Abmischen gezielt herbeigeführtes oder durch den Herstellungsprozess bedingtes Gemisch von 4,4'-Diphenylmethandiisocyanat mit anderen MDI-Isomeren (2,4'-Diphenylmethandiisocyanat und/oder 2,2'-Diphenylmethandiisocyanat), oder mit MDI-Oligomeren oder MDI-Homologen.

Insbesondere ist das Polyisocyant ein monomer MDI-Typ mit erhöhtem Anteil an 2,4'-MDI, beispielsweise die kommerziell erhältlichen Produkte Desmodur^{®} 2424 (von Bayer MaterialScience) oder Lupranat^{®} MI (von BASF), oder ein Gemisch von monomerem MDI und MDI-Homologen mit einem niedrigen Anteil an Homologen, beispielsweise die kommerziell erhältlichen Produkte Desmodur^{®} VL50 (von Bayer MaterialScience) oder Voranate^{®} M 2940 (von Dow), oder ein partiell carbodiimidisiertes 4,4'-Diphenylmethandiisocyanat, beispielsweise die kommerziell erhältlichen Produkte Desmodur^{®} CD (von Bayer Material Science), Lupranat^{®} MM 103 (von BASF), Isonate^{®} M 143 oder Isonate^{®} M 309 (beide von Dow), Suprasec^{®} 2020 oder Suprasec^{®} 2388 (beide von Huntsman).
Mit diesen Polyisocyanaten werden besonders gute Verarbeitungseigenschaften und besonders hohe Festigkeiten erhalten.

Weiterhin enthält die Zusammensetzung mindestens einen latenten Härter, welcher in der ersten oder in der zweiten oder in beiden Komponenten enthalten ist.
Bevorzugt ist der latente Härter in der ersten Komponente enthalten.

Als latenter Härter geeignet ist ein blockiertes Amin, welches eine blockierte, hydrolytisch aktivierbare Aminogruppe und mindestens eine weitere Reaktivgruppe ausgewählt aus der Gruppe bestehend aus Hydroxylgruppe, Mercaptogruppe, sekundärer Aminogruppe, primärer Aminogruppe und blockierter, hydrolytisch aktivierbarer Aminogruppe aufweist.
Solche blockierten Amine sind in der Polyurethanchemie bekannte Substanzen, die als sogenannte latente Härter in Isocyanatgruppen aufweisenden Zusammensetzungen verwendet werden. Sie werden insbesondere aus der Kondensation von mindestens einem primären oder sekundären Aminen mit mindestens einem Keton oder Aldehyd erhalten.

Als Keton geeignet sind dabei insbesondere Aceton, Methylethylketon, Methylpropylketon, Methylisopropylketon, Methylisobutylketon, Methylpentylketon, Methylisopentylketon, Diethylketon, Dipropylketon, Diisopropylketon, Dibutylketon, Diisobutylketon, Cyclopentanon, Cyclohexanon oder Actetophenon.

Als Aldehyd geeignet sind dabei insbesondere Formaldehyd, Acetaldehyd, Propanal, 2-Methylpropanal, Butanal, 2-Methylbutanal, 2-Ethylbutanal, Pentanal, 2-Methylpentanal, 3-Methylpentanal, 4-Methylpentanal, 2,3-Dimethylpentanal, Hexanal, 2-Ethylhexanal, Heptanal, Octanal, Nonanal, Decanal, Undecanal, 2-Methylundecanal, Dodecanal, Methoxyacetaldehyd, Cyclopropancarboxaldehyd, Cyclopentancarboxaldehyd, Cyclohexancarboxaldehyd, Diphenylacetaldehyd, Benzaldehyd, substituierte Benzaldehyde, insbesondere mit einer verzweigten Alkylgruppe mit 10 bis 14 C-Atomen substituierte Benzaldehyde, oder tertiäre Aldehyde, insbesondere 2,2-Dimethylpropanal (Pivalaldehyd), 2,2-Dimethyl-3-phenylpropanal, 2,2-Dimethyl-3-acetoxypropanal, 2,2-Dimethyl-3-isobutyroxypropanal, 2,2-Dimethyl-3-caproyloxypropanal, 2,2-Dimethyl-3-benzoyloxypropanal, 2,2-Dimethyl-3-capryloyloxypropanal, 2,2-Dimethyl-3-caprinoyloxypropanal, 2,2-Dimethyl-3-lauroyloxypropanal, 2,2-Dimethyl-3-myristoyloxypropanal, 2,2-Dimethyl-3-palmitoyloxypropanal, 2,2-Dimethyl-3-stearoyloxypropanal, 2,2-Dimethyl-3-dimethylaminopropanal, 2,2-Dimethyl-3-diethylaminopropanal, 2,2-Dimethyl-3-dibutylaminopropanal, 2,2-Dimethyl-3-(N-pyrrolidino)-propanal, 2,2-Dimethyl-3-(N-piperidino)propanal, 2,2-Dimethyl-3-(N-morpholino)propanal, 2,2-Dimethyl-3-(N-(2,6-dimethyl)morpholino)propanal, 2,2-Dimethyl-3-(N-(4-methylpiperazino))propanal, 2,2-Dimethyl-3-(N-(4-ethylpiperazino))propanal, 2,2-Dimethyl-3-(N-benzylmethylamino)propanal, 2,2-Dimethyl-3-(N-benzylisopropylamino)propanal, 2,2-Dimethyl-3-(N-methylcyclohexylamino)propanal, 2,2-Dimethyl-3-bis-(2-methoxyethyl)aminopropanal, 2,2-Dimethyl-3-bis(2-hydroxyethyl)aminopropanal oder 2,2-Dimethyl-3-bis(2-hydroxypropyl)-aminopropanal.

Geeignete primäre oder sekundäre Amine, von welchen der latente Härter, bzw. das blockierte Amin, abgeleitet ist, sind Amine, welche mindestens eine primäre oder sekundäre Aminogruppe und zusätzlich mindestens eine weitere Reaktivgruppe ausgewählt aus der Gruppe bestehend aus Hydroxylgruppe, Mercaptogruppe, sekundärer Aminogruppe und primärer Aminogruppe aufweisen.

Bevorzugt ist der latente Härter ein Oxazolidin oder ein Aldimin, dessen Aldimingruppen nicht zu Enamingruppen tautomerisierbar sind, welche also in alpha-Position zum Kohlenstoffatom des Imins keine Wasserstoffatome aufweisen.
Diese latenten Härter ermöglichen besonders lange Offenzeiten und können unter Ausschluss von Feuchtigkeit zusammen mit Isocyanatgruppen über einen längeren Zeitraum gelagert werden.

Bevorzugt enthält der latente Härter zwei oder drei blockierte Aminogruppen und keine weiteren Reaktivgruppen, oder er enthält eine blockierte Aminogruppe und eine weitere Reaktivgruppe in Form einer Hydroxylgruppe, Mercaptogruppe, primären Aminogruppe oder sekundären Aminogruppe. Bevorzugt ist die weitere Reaktivgruppe eine Hydroxylgruppe oder eine sekundäre Aminogruppe, insbesondere eine Hydroxylgruppe.
Solche latenten Härter ermöglichen Zusammensetzungen mit einer besonders langen Offenzeit und somit einer guten Verarbeitbarkeit.

In einer bevorzugten Ausführungsform der Erfindung ist der latente Härter ein Oxazolidin, insbesondere ein Kondensationsprodukt von Diethanolamin mit Aldehyden oder Ketonen zu einem N-(2-Hydroxyethyl)tetrahydrooxazol. Bevorzugt ist dieses anschliessend mittels Diisocyanaten, insbesondere HDI, oder mittels Diestern oder Carbonaten, zu einem Bis-Oxazolidin umgesetzt. Durch hydrolytische Aktivierung ist aus jeder Oxazolidingruppe eine sekundäre Aminogruppe und eine Hydroxylgruppe freisetzbar.
Geeignete kommerzielle Oxazolidine sind insbesondere Incozol^{®} 3, Incozol^{®} LV, Incozol^{®} 4, Incozol^{®} HP, Incozol^{®} NC, Incozol^{®} CF, Incozol^{®} EH oder Incozol^{®} K (von Incorez).

In einer weiteren bevorzugten Ausführungsform der Erfindung ist der latente Härter ein Aldimin, dessen Aldimingruppen nicht zu Enamingruppen tautomerisierbar sind. Solche Aldimine sind insbesondere abgeleitet von aromtischen Aldehyden wie Benzaldehyd, substituierten Benzaldehyden oder tertiären aliphatischen Aldehyden.

Bevorzugt basiert ein solches Aldimin auf einem primären Amin ausgewählt aus der Gruppe bestehend aus 1,3-Pentandiamin, 1,5-Diamino-2-methylpentan, 1,6-Hexamethylendiamin, 2,2(4),4-Trimethylhexamethylendiamin, 1,2-, 1,3- und 1,4-Diaminocyclohexan, 1-Amino-3-aminomethyl-3,5,5-trimethylcyclohexan (Isophorondiamin), 4(2)-Methyl-1,3-diaminocyclohexan, 1,3-Bis(aminomethyl)cyclohexan, 1,4-Bis(aminomethyl)cyclohexan, Bis(4-aminocyclohexyl)-methan, Bis(4-amino-3-methylcyclohexyl)methan, 2,5(2,6)-Bis(aminomethyl)bicyclo[2.2.1]heptan (NBDA), 3(4),8(9)-Bis-(aminomethyl)tricyclo[5.2.1.0^{2,6}]decan, 1,3-Bis(aminomethyl)benzol, 1,4-Bis(aminomethyl)benzol, 3,6-Dioxaoctan-1,8-diamin, 4,7-Dioxadecan-1,10-diamin, 4-Aminomethyl-1,8-octandiamin, Polyoxyalkylendi- und triamine mit einem Molekulargewicht bis 6'000 g/mol, insbesondere die unter dem Handelsnamen Jefifamine^{®} erhältlichen Typen D-230, D-400, D-2000, D-4000, T-403 und T-5000 von Huntsman und dazu analoge Verbindungen von BASF oder Nitroil; 1,3- und 1,4-Phenylendiamin, 2,4(6)-Toluylendiamin, 4,4'-, 2,4'- und 2,2'-Diaminodiphenylmethan, 5-Amino-1-pentanol, 6-Amino-1-hexanol, 4-(2-Aminoethyl)-2-hydroxyethylbenzol, 3-Aminomethyl-3,5,5-trimethylcyclohexanol, 2-(2-Aminoethoxy)ethanol, Triethylenglykolmonoamin, 3-(2-Hydroxyethoxy)propylamin, 3-(2-(2-Hydroxyethoxy)ethoxy)propylamin, 3-(6-Hydroxyhexyloxy)propylamin, N-Methyl-1,2-ethandiamin, N-Ethyl-1,2-ethandiamin, N-Cyclohexyl-1,2-ethandiamin, N-Methyl-1,3-propandiamin, N-Ethyl-1,3-propandiamin, N-Butyl-1,3-propandiamin, N-Cyclohexyl-1,3-propandiamin, 4-Aminomethylpiperidin, 3-(4-Aminobutyl)piperidin, N-Cocoalkyl-1,3-propandiamin, N-Oleyl-1,3-propandiamin, N-Soyaalkyl-1,3-propandiamin und N-Talgalkyl-1,3-propandiamin.

Ganz besonders bevorzugt ist der latente Härter ein Aldimin der Formel (IV), 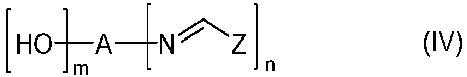 wobei
m für 0 oder 1 und n für eine ganze Zahl von 1 bis 3 steht, wobei (m+n) für 2 oder 3 steht,
A für einen (m+n)-wertigen, gegebenenfalls Ether-Sauerstoff aufweisenden Kohlenwasserstoff-Rest mit 2 bis 20 C-Atomen steht, und
Z für einen gegebenenfalls substituierten aromatischen Rest oder für einen Rest der Formel 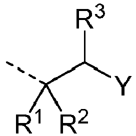 steht, wobei
   R¹ und R² unabhängig voneinander jeweils für einen einwertigen Kohlenwasserstoff-Rest mit 1 bis 12 C-Atomen stehen, oder zusammen für einen zweiwertigen Kohlenwasserstoff-Rest mit 4 bis 12 C-Atomen stehen, welcher Teil eines, gegebenenfalls substituierten, carbocyclischen Rings mit 5 bis 8, bevorzugt 6, C-Atomen ist,
   R³ für ein Wasserstoffatom oder für einen Alkyl- oder Arylalkyl- oder Alkoxycarbonyl-Rest mit 1 bis 12 C-Atomen steht, und Y für 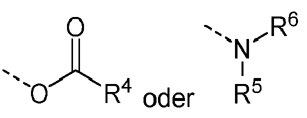 steht, wobei
      R⁴ für einen einwertigen, gegebenenfalls Ether- oder Aldehyd-Einheiten enthaltenden Kohlenwasserstoff-Rest mit 6 bis 20 C-Atomen steht, und R⁵ und R⁶ unabhängig voneinander jeweils für einen einwertigen, gegebenenfalls Heteroatome in der Form von Hydroxylgruppen oder Ether-Sauerstoff enthaltenden, aliphatischen, cycloaliphatischen oder arylaliphatischen Kohlenwasserstoff-Rest mit 2 bis 20 C-Atomen, oder zusammen für einen zweiwertigen aliphatischen Rest mit 4 bis 12 C-Atomen, der Teil eines, gegebenenfalls substituierten, heterocyclischen Rings mit 5 bis 8, bevorzugt 6, Ringatomen ist und neben dem Stickstoffatom gegebenenfalls weitere Heteroatome in der Form von Ether-Sauerstoff, Thioether-Schwefel oder tertiärem Amin-Stickstoff enthält, stehen.

Die Aldimine der Formel (IV) sind einfach verarbeitbar und ermöglichen Zusammensetzungen mit einer langen Offenzeit und geringem oder gar keinem Geruch.

Bevorzugt steht m für 0. Eine solche Zusammensetzung weist besonders konstante mechanische Eigenschaften in einem Temperaturbereich von etwa -40 bis 90 °C auf.

Bevorzugt steht A
- entweder für einen zwei- oder dreiwertigen aliphatischen oder cycloaliphatischen Kohlenwasserstoff-Rest mit einem Molekulargewicht im Bereich von 28 bis 500 g/mol,
- oder für einen zwei- oder dreiwertigen Polyoxyalkylen-Rest mit einem mittleren Molekulargewicht im Bereich von 170 bis 6'000 g/mol.

Besonders bevorzugt ist A ausgewählt aus der Gruppe bestehend aus 3-Oxa-1,5-pentylen, 2-Methyl-1,5-pentylen, 1,6-Hexylen, 2,2(4),4-Trimethyl-1,6-hexamethylen, 1,2-Cyclohexylen, (1,5,5-Trimethylcyclohexan-1-yl)methan-1,3, 4(2)-Methyl-1,3-cyclohexylen, 1,3-Cyclohexylen-bis(methylen), 1,4-Cyclohexylen-bis(methylen), Methylendicyclohexan-4-yl, (Bicyclo[2.2.1]heptan-2,5(2,6)-diyl)dimethylen, (Tricyclo[5.2.1.0^{2,6}]decan-3(4),8(9)-diyl)dimethylen, 1,3-Phenylen-bis(methylen), 1,4-Phenylen-bis(methylen), α,ω-Polyoxypropylen mit einem mittleren Molekulargewicht im Bereich von 170 bis 2'000 g/mol, Trimethylolpropan- oder Glycerin-gestartetes Tris(ω-polyoxypropylen) mit einem mittleren Molekulargewicht im Bereich von 330 bis 5'000 g/mol und 1,4-Phenylen.

In einer bevorzugten Ausführungsform steht Z für einen mit einer verzweigten Alkylgruppe mit 10 bis 14 C-Atomen substituierten Phenyl-Rest.

Besonders bevorzugt steht Z für einen Rest der Formel 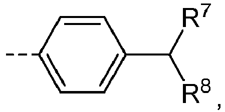 wobei R⁷ und R⁸ jeweils für einen Alkyl-Rest stehen und zusammen 9 bis 13 C-Atome aufweisen. Bevorzugt sind die Reste R⁷ und R⁸ jeweils linear.

Diese Aldimine der Formel (IV) ermöglichen geruchsfreie Zusammensetzungen, welche ganz besonders wenig zur Verursachung von Spannungsrissen in glasigen thermoplastischen Kunststoffen neigen.

In einer weiteren bevorzugten Ausführungsform steht Z für einen Rest der Formel 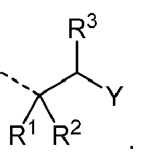 Bevorzugt stehen R¹ und R² dabei jeweils für einen Methyl-Rest. Bevorzugt steht R³ dabei für einen Wasserstoff-Rest.

Bevorzugt steht Y dabei für 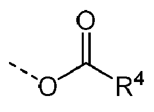 und R⁴ für einen linearen Alkylrest mit 11 C-Atomen. Diese Aldimine der Formel (IV) ermöglichen geruchsfreie Zusammensetzungen mit besonders hoher Elastizität, welche kaum Spannungsrissen in glasigen thermoplastischen Kunststoffen verursachen. Bevorzugt steht Y dabei weiterhin für 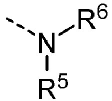 und R⁵ und R⁶ stehen zusammen für einen 3-Oxa-1,5-pentylen-Rest, welcher zusammen mit dem Stickstoffatom einen Morpholin-Ring bildet. Diese Aldimine der Formel (IV) ermöglichen geruchsarme Zusammensetzungen mit besonders hoher Festigkeit, welche keine Spannungsrisse in glasigen thermoplastischen Kunststoffen verursachen, auch nicht beim Vorhandensein von Zirkonium(IV)-Katalysatoren.

Bevorzugt steht Y dabei weiterhin für 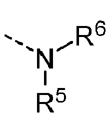 und R⁵ und R⁶ stehen jeweils für 2-Hydroxyethyl oder 2-Hydroxypropyl. Diese Aldimine der Formel (IV) ermöglichen geruchsfreie Zusammensetzungen, bei welchen der freigesetzte Aldehyd bei der Aushärtung in die vernetzte Zusammensetzung eingebaut wird, wodurch diese Zusammensetzungen keine Migrations-bedingten Fehler verursachen.

Insbesondere ist der latente Härter ausgewählt aus der Gruppe bestehend aus N,N'-Bis(4-alkylbenzyliden)-1,6-hexandiamin, N,N'-Bis(2,2-dimethyl-3-lauroyloxypropyliden)-1,6-hexamethylendiamin, N,N'-Bis(2,2-dimethyl-3-(N-morpholino)propyliden)-1,6-hexamethylendiamin, N,N'-Bis(2,2-dimethyl-3-bis(2-hydroxyethyl)aminopropyliden)-1,6-hexamethylendiamin, N,N'-Bis(2,2-dimethyl-3-bis(2-hydroxypropyl)aminopropyliden)-1,6-hexamethylendiamin, N,N'-Bis(4-alkylbenzyliden)-1-amino-3-aminomethyl-3,5,5-trimethylcyclohexylamin, N,N'-Bis(2,2-dimethyl-3-lauroyloxypropyliden)-1-amino-3-aminomethyl-3,5,5-trimethylcyclohexan, N,N'-Bis(2,2-dimethyl-3-(N-morpholino)propyliden)-1-amino-3-aminomethyl-3,5,5-trimethylcyclohexan, N,N'-Bis(2,2-dimethyl-3-bis(2-hydroxyethyl)aminopropyliden)-1-amino-3-aminomethyl-3,5,5-trimethylcyclohexan, N,N'-Bis(2,2-dimethyl-3-bis(2-hydroxypropyl)aminopropyliden)-1-amino-3-aminomethyl-3,5,5-trimethylcyclohexan, N,N'-Bis(4-alkylbenzyliden)polyoxypropylendiamin, N,N'-Bis(2,2-dimethyl-3-lauroyloxypropyliden)polyoxypropylendiamin, N,N'-Bis(2,2-dimethyl-3-(N-morpholino)propyliden)polyoxypropylendiamin, N,N'-Bis(2,2-dimethyl-3-bis(2-hydroxyethyl)aminopropyliden)polyoxypropylendiamin, N,N'-Bis(2,2-dimethyl-3-bis(2-hydroxypropyl)aminopropyliden)-polyoxypropylendiamin, N,N',N"-Tris(4-alkylbenzyliden)polyoxypropylentriamin, N,N',N"-Tris(2,2-dimethyl-3-lauroyloxypropyliden)polyoxypropylentriamin, N,N',N"-Tris(2,2-dimethyl-3-(N-morpholino)propyliden)polyoxypropylentriamin, N,N',N"-Tris(2,2-dimethyl-3-bis(2-hydroxyethyl)aminopropyliden)polyoxypropylentriamin, N,N',N"-Tris(2,2-dimethyl-3-bis(2-hydroxypropyl)aminopropyliden)-polyoxypropylentriamin, N-4-Alkylbenzyliden-2-(2-aminoethoxy)ethanol, N-2,2-Dimethyl-3-lauroyloxypropyliden-2-(2-aminoethoxy)ethanol und N-2,2-Dimethyl-3-(N-morpholino)propyliden-2-(2-aminoethoxy)ethanol, wobei Alkyl jeweils für einen verzweigten Decyl-, Undecyl-, Dodecyl-, Tridecyl- oder Tetradecyl-Rest steht.

Diese Aldimine sind einfach zugänglich und ermöglichen zweikomponentige Polyurethanzusammensetzungen mit besonders guten mechanischen Eigenschaften.

Davon bevorzugt sind N,N'-Bis(2,2-dimethyl-3-lauroyloxypropyliden)-1,6-hexamethylendiamin, N,N'-Bis(2,2-dimethyl-3-(N-morpholino)propyliden)-1,6-hexamethylendiamin, N,N'-Bis(2,2-dimethyl-3-lauroyloxypropyliden)-1-amino-3-aminomethyl-3,5,5-trimethylcyclohexan, N,N'-Bis(2,2-dimethyl-3-(N-morpholino)-propyliden)-1-amino-3-aminomethyl-3,5,5-trimethylcyclohexan, N,N'-Bis(2,2-dimethyl-3-lauroyloxypropyliden)polyoxypropylendiamin mit einem mittleren Molekulargewicht im Bereich von 730 bis 950 g/mol, N,N'-Bis(2,2-dimethyl-3-(N-morpholino)propyliden)polyoxypropylendiamin mit einem mittleren Molekulargewicht im Bereich von 500 bis 750 g/mol, N,N',N"-Tris(2,2-dimethyl-3-lauroyloxypropyliden)polyoxypropylentriamin mit einem mittleren Moldekulargewicht im Bereich von 1'200 bis 1'300 g/mol oder N-2,2-Dimethyl-3-lauroyloxypropyliden-2-(2-aminoethoxy)ethanol.

Diese Aldimine sind besonders einfach zugänglich, bei Raumtemperatur flüssig und ermöglichen geruchsarme oder geruchsfreie Zusammensetzung mit störungsfreier Aushärtung und den beschriebenen guten mechanischen Eigenschaften.

Der latente Härter ist in der Zusammensetzung in einer solchen Menge vorhanden, dass das Verhältnis der Anzahl Reaktivgruppen des latenten Härters zur Anzahl der vorhandenen OH-Gruppen im Bereich von 0.02 bis 0.4 liegt. Dabei werden im latenten Härter sowohl blockierte als auch nicht blockierte Reaktivgruppen gezählt. Eine Oxazolidinogruppe wird als zwei Reaktivgruppen gezählt, da aus einer Oxazolidinogruppe eine sekundäre Aminogruppe und eine Hydroxylgruppe freigesetzt werden.
Bei dieser geringen Menge latentem Härter wird eine überraschend deutliche Erhöhung der Festigkeit der Zusammensetzung festgestellt, ohne dass andere gute Eigenschaften der Zusammensetzung wie insbesondere die Dehnung oder die niedrige Glasübergangstemperatur oder die geringe Temperaturabhängigkeit der mechanischen Eigenschaften in nennenswertem Mass beeinflusst werden.
Bevorzugt liegt das oben genannte Verhältnis im Bereich von 0.04 bis 0.3. In diesem Verhältnis werden Materialen mit besonders hoher Festigkeit und/oder Dehnung erhalten.

Die Zusammensetzung kann in der ersten und/oder der zweiten Komponente weitere Bestandteile enthalten.

Die erste Komponente enthält gegebenenfalls weitere mit Isocyanatgruppen reaktionsfähige Substanzen, insbesondere zwei- oder mehrfunktionelle Alkohole, Polyphenole, Polythiole, Polyamine oder Aminoalkohole.

Die erste Komponente kann zusätzlich weitere Polyole enthalten, insbesondere handelsübliche Polyole wie insbesondere:
- Polyetherpolyole, insbesondere Polyoxyalkylendiole und/oder Polyoxyalkylentriole, insbesondere Polymerisationsprodukte von Ethylenoxid oder 1,2-Propylenoxid oder 1,2- oder 2,3-Butylenoxid oder Oxetan oder Tetrahydrofuran oder Mischungen davon, wobei diese mit Hilfe eines Startermoleküls mit zwei oder mehreren aktiven Wasserstoffatomen polymerisiert sein können, insbesondere einem Startermolekül wie Wasser, Ammoniak oder einer Verbindung mit mehreren OH- oder NH-Gruppen wie beispielsweise 1,2-Ethandiol, 1,2- oder 1,3-Propandiol, Neopentylglykol, Diethylenglykol, Triethylenglykol, die isomeren Dipropylenglykole oder Tripropylenglykole, die isomeren Butandiole, Pentandiole, Hexandiole, Heptandiole, Octandiole, Nonandiole, Decandiole, Undecandiole, 1,3- oder 1,4-Cyclohexandimethanol, Bisphenol A, hydriertes Bisphenol A, 1,1,1-Trimethylolethan, 1,1,1-Trimethylolpropan, Glycerin oder Anilin, oder Mischungen der vorgenannten Verbindungen. Ebenfalls geeignet sind Polyetherpolyole mit darin dispergierten Polymerpartikeln, insbesondere Styrol-Acrylnitril-Partikeln (SAN) oder Polyharnstoff- bzw. Polyhydrazodicarbonamid-Partikeln (PHD).

- Polyesterpolyole, insbesondere aus der Polykondensation von Hydroxycarbonsäuren oder insbesondere solche, welche hergestellt sind aus zwei- bis dreiwertigen, insbesondere zweiwertigen, Alkoholen, wie beispielsweise Ethylenglykol, Diethylenglykol, Propylenglykol, Dipropylenglykol, Neopentylglykol, 1,4-Butandiol, 1,5-Pentandiol, 3-Methyl-1,5-hexandiol, 1,6-Hexandiol, 1,8-Octandiol, 1,10-Decandiol, 1,12-Dodecandiol, 1,12-Hydroxystearylalkohol, 1,4-Cyclohexandimethanol, Dimerfettsäurediol (Dimerdiol), Hydroxypivalinsäureneopentylglykolester, Glycerin, 1,1,1-Trimethylolpropan oder Mischungen der vorgenannten Alkohole, mit organischen Di- oder Tricarbonsäuren, insbesondere Dicarbonsäuren, oder deren Anhydride oder Ester, wie insbesondere Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure oder Trimellithsäureanhydrid, oder Mischungen der vorgenannten Säuren, sowie Polyesterpolyole aus Lactonen wie insbesondere ε-Caprolacton und Startern wie den vorgenannten zwei- oder dreiwertigen Alkoholen. Besonders geeignete sind Polyesterdiole.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen, insbesondere Polyetherpolyesterpolyole.
- Polyacrylat- und Polymethacrylatpolyole.
- Polyhydroxyfunktionelle Fette und Öle, beispielsweise natürliche Fette und Öle, inbesondere Ricinusöl; oder durch chemische Modifizierung von natürlichen Fetten und Ölen gewonnene - sogenannte oleochemische - Polyole, beispielsweise die durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole, oder aus natürlichen Fetten und Ölen
   durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivaten davon erhaltene Polyole. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.
- Polykohlenwasserstoffpolyole, auch Oligohydrocarbonole genannt, wie beispielsweise polyhydroxyfunktionelle Polyolefine, Polyisobutylene, Polyisoprene; polyhydroxyfunktionelle Ethylen-Propylen-, Ethylen-Butylen- oder Ethylen-Propylen-Dien-Copolymere, wie sie beispielsweise von der Firma Kraton Polymers hergestellt werden; polyhydroxyfunktionelle Polymere von Dienen, insbesondere von 1,3-Butadien, welche insbesondere auch aus anionischer Polymerisation hergestellt sein können; polyhydroxyfunktionelle Copolymere aus Dienen wie 1,3-Butadien oder Diengemischen und Vinylmonomeren wie Styrol, Acrylonitril, Vinylchlorid, Vinylacetat, Vinylalkohol, Isobutylen und Isopren, beispielsweise polyhydroxyfunktionelle Acrylonitril/ Butadien-Copolymere, wie sie beispielsweise aus Epoxiden oder Aminoalkoholen und carboxylterminierten Acrylonitril/Butadien-Copolymeren (beispielsweise kommerziell erhältlich unter dem Namen Hypro^{®} CTBN oder CTBNX oder ETBN von Emerald Performance Materials) hergestellt werden können; sowie hydrierte polyhydroxyfunktionelle Polymere oder Copolymere von Dienen.

Bevorzugt sind Polyole mit einem mittleren Molekulargewicht im Bereich von 500 bis 10'000 g/mol, insbesondere 500 bis 6'000 g/mol.
Bevorzugt sind Polyole mit einer mittlere OH-Funktionalität im Bereich von 1.6 bis 3, insbesondere 1.8 bis 3.
Bevorzugt sind bei Raumtemperatur flüssige Polyole.

Bevorzugt sind hydrophobe Polyole, insbesondere Polyhydroxyfunktionelle Fette und Öle, Polykohlenwasserstoffpolyole oder Polyether-, Polyester- oder Polycarbonat-Polyole mit einer mindestens 4 C-Atome aufweisenden Repetiereinheit. Die Anwesenheit solcher hydrophober Polyole in nicht zu hoher Menge beeinträchtigt die beschriebenen guten Eigenschaften der Zusammensetzung nicht allzu stark.

In einer bevorzugten Ausführungsform der Erfindung enthält die erste Komponente zusätzlich mindestens ein hydrophobes Diol mit einem mittleren Molekulargewicht im Bereich von 500 bis 3'000 g/mol ausgewählt aus der Gruppe bestehend aus Polyetherdiolen, Polybutadiendiolen, Polycarbonatdiolen, Polyesterdiolen und Mischformen dieser Diole, mit jeweils einer mindestens 4 C-Atome aufweisenden Repetiereinheit.
Davon bevorzugt sind Polycarbonatdiole, Polyesterdiole und Polyestercarbonatdiole mit jeweils einer mindestens 4 C-Atome aufweisenden Repetiereinheit. Eine solche Zusammensetzung ermöglicht besonders gute Haftungseigenschaften, insbesondere auf Substraten aus Polycarbonat.

Das hydrophobe Diol weist bevorzugt ein mittleres Molekulargewicht im Bereich von 500 bis 2'000 g/mol, besonders bevorzugt 750 bis 1'500 g/mol, insbesondere 750 bis 1'000 g/mol, auf. Eine solche Zusammensetzung ermöglicht besonders gute Haftungseigenschaften und besonders hohe Festigkeiten.

Bevorzugt ist das hydrophobe Diol ein aliphatisches oder cycloaliphatisches Diol, welches frei ist von aromatischen Bestandteilen.

Ein besonders geeignetes hydrophobes Polyesterdiol ist ein Kondensationsprodukt von 3-Methyl-1,5-pentandiol und Adipinsäure oder Sebacinsäure. Solche Polyesterdiole sind beispielsweise unter dem Handelsnamen Kuraray P2010 von der Firma Kuraray erhältlich.
Ein besonders geeignetes hydrophobes aliphatisches Polycarbonatdiol basiert auf 3-Methyl-1,5-pentandiol und 1,6-Hexandiol und ist beispielsweise unter dem Handelsnamen Kuraray C2050 von der Firma Kuraray erhältlich.
Ein besonders geeignetes hydrophobes aliphatisches Polyestercarbonatdiol basiert auf 1,6-Hexandiol und ε-Caprolacton ist unter dem Handelsnamen Desmophen^{®} C 1200 von der Firma Covestro erhältlich.

Bevorzugt enthält die erste Komponente einen Gehalt an hydrophobem Diol im Bereich von 5 bis 19 Gewichts-%, insbesondere 5 bis 15 Gewichts-%, bezogen auf die Gesamtmenge aller Polyole mit einem mittleren Molekulargewicht von mindestens 500 g/mol.

Bevorzugt enthält die erste Komponente nur einen geringen Gehalt oder keine nicht-hydrophoben Polyole. Bevorzugt enthält sie bezogen auf die Gesamtmenge aller Polyole mit einem mittleren Molekulargewicht von mindestens 500 g/mol höchstens 15 Gewichts-%, besonders bevorzugt höchstens 10 Gewichts-%, insbesondere höchstens 5 Gewichts-%, am meisten bevorzugt keine, nicht-hydrophoben Polyole.Dabei sind nicht-hydrophobe Polyole insbesondere Polyether- oder Polyester- oder Polycarbonat-Polyole, welche keine mindestens 4 C-Atome aufweisende Repetiereinheit enthalten, insbesondere Polyoxyethylen-Polyole, Polyoxypropylen-Polyole oder Mischpolyole davon.

Weiterhin kann die erste Komponente einen Kettenverlängerer enthalten.
Dafür geeignet sind Diole mit zwei primären Hydroxylgruppen und einem Molekulargewicht im Bereich von 60 bis 150 g/mol, insbesondere 1,2-Ethandiol, 1,3-Propandiol, 2-Methyl-1,3-propandiol, 1,4-Butandiol, 1,5-Pentandiol, Neopentylglykol, 1,6-Hexandiol, 3-Methyl-1,5-pentandiol, 1,7-Heptandiol, 1,8-Octandiol, 1,3-Cyclohexandimethanol, 1,4-Cyclohexandimethanol, Diethylenglykol oder Triethylenglykol. Davon bevorzugt sind Diole mit mindestens 4 C-Atomen, insbesondere 2-Methyl-1,3-propandiol, 1,4-Butandiol, 1,5-Pentandiol, Neopentylglykol, 1,6-Hexandiol, 3-Methyl-1,5-pentandiol oder 1,4-Cyclohexandimethanol. Das Diol bildet mit dem Polyisocyanat im ausgehärteten Material sogenannte Hartsegmente und ermöglicht dadurch ausgehärtete Zusammensetzungen mit besonders hohen Festigkeiten.
Bevorzugt enthält die erste Komponente bezogen auf die Gesamtmenge aller Polyole mit einem mittleren Molekulargewicht von mindestens 500 g/mol nur geringe Anteile an Kettenverlängerern, bevorzugt maximal 5 Gewichts-%, besonders bevorzugt maximal 2 Gewichts-%, insbesondere keine. Ein hoher Gehalt an Kettenverlängerern verschiebt die Glasübergangstemperatur in Richtung höhere Temperatur und kann weitere Glasübergangstemperatur bewirken, was für gleichbleibende mechanische Eigenschaften in einem breiten Temperaturbereich nachteilig ist.

Weiterhin kann die erste Komponente weitere zwei- oder mehrfunktionelle Alkohole enthalten, wie insbesondere 1,2-Butandiol, 1,3-Butandiol, 1,3-Pentandiol, Dibromneopentylglykol, 1,2-Hexandiol, 1,2-Octandiol, 2-Ethyl-1,3-hexandiol, ethoxyliertes Bisphenol-A, propoxyliertes Bisphenol-A, Cyclohexandiol, hydriertes Bisphenol-A, Dimerfettsäurealkohole, 1,1,1-Trimethylolethan, 1,1,1-Trimethylolpropan, Glycerin, Pentaerythritol, Zuckeralkohole wie insbesondere Xylit, Sorbit oder Mannit oder Zucker wie insbesondere Saccharose oder alkoxylierte Derivate der genannten Alkohole oder Mischungen der genannten Alkohole.

Weiterhin kann die erste Komponente zusätzlich mindestens ein primäres Polyamin wie insbesondere 4(2)-Methyl-1,3-phenylendiamin (TDA), 3,5-Diethyl-2,4(6)-toluylendiamin (DETDA), 3,5-Dimethylthio-2,4(6)-toluylendiamin, 4,4'-Diaminodiphenylmethan (MDA), 3,3',5,5'-Tetraethyl-4,4'-diaminodiphenylmethan (M-DEA), 1,5-Diamino-2-methylpentan (MPMD), 2,2(4),4-Trimethylhexamethylendiamin (TMD), 1,2-Diaminocyclohexan, Bis(4-aminocyclohexyl)methan, 1-Amino-3-aminomethyl-3,5,5-trimethylcyclohexan (Isophorondiamin oder IPDA), 4(2)-Methyl-1,3-cyclohexandiamin, 1,3-Bis(aminomethyl)cyclohexan, 1,4-Bis(aminomethyl)cyclohexan, 2,5(2,6)-Bis(aminomethyl)bicyclo[2.2.1]heptan (NBDA), 1,3-Bis(aminomethyl)benzol (MXDA), 1,4-Bis(aminomethyl)benzol oder Polyoxyalkylenpolyamine mit einem mittleren Molekulargewicht im Bereich von 200 bis 500 g/mol, insbesondere die Jeffamine^{®}-Typen D-230, D-400 oder T-403 (alle von Huntsman).
Ein solches primäres Polyamin kann insbesondere die Fliesseigenschaften der Zusammensetzung beim Vermischen der beiden Komponenten unmittelbar derart verändern, dass ein strukturviskoses, weniger stark abfliessendes oder abrutschendes Material entsteht. Dies wird auch als "in situ-Thixotropie" bezeichnet.

Weiterhin kann die erste Komponente zusätzlich mindestens einen Aminhärter mit zwei sterisch und/oder elektronisch stark desaktivierten Aminogruppen enthalten, wie insbesondere ein p-Aminobenzoesäurediester, insbesondere von einem Polytetramethylenoxiddiol, insbesondere Versalink^{®} P-650 oder Versalink^{®} P-1000 (beide von Air Products).

Bevorzugt enthält die erste Komponente nur geringe Mengen oder keine zwei- oder mehrfunktionellen Alkohole, primären Polyamine oder Aminhärter, bevorzugt weniger als 5 Gewichts-%, besonders bevorzugt weniger als 2 Gewichts-%, insbesondere weniger als 1 Gewichts-%, am meisten bevorzugt keine, zwei- oder mehrfunktionellen Alkohole, primären Polyamine oder Aminhärter.

Weiterhin kann die erste Komponente zusätzlich Wasser enthalten, insbesondere in einer solchen Menge, dass die erste Komponente bis zu 2 Gewichts-%, insbesondere bis zu 1 Gewichts-%, Wasser enthält. Bevorzugt ist das Wasser an ein Trägermaterial gebunden. Durch die Anwesenheit von Wasser in der Zusammensetzung wird die Hydrolyse von Aldimingruppen erleichtert bzw. erfolgt sie weitgehend unabhängig von der Diffusion von Wasser in die vermischte, applizierte Zusammensetzung aus der Umgebung, wodurch die Aushärtung rascher erfolgt.

Die zweite Komponente enthält gegebenenfalls mindestens ein Isocyanatgruppen-haltiges Polyurethanpolymer.
Ein solches wird insbesondere erhalten aus der Umsetzung von mindestens einem Polyol mit einer überstöchiometrischen Menge von mindestens einem Polyisocyanat, insbesondere einem Diisocyanat. Die Umsetzung wird bevorzugt unter Feuchtigkeitsausschluss bei einer Temperatur im Bereich von 20 bis 160 °C durchgeführt, gegebenenfalls in Anwesenheit geeigneter Katalysatoren. Der Überschuss an Polyisocyanat wird bevorzugt so gewählt, dass im Polyurethanpolymer nach der Umsetzung aller Hydroxylgruppen ein Gehalt an freien Isocyanatgruppen im Bereich von 1 bis 30 Gewichts-%, bevorzugt 1.5 bis 25 Gewichts-%, besonders bevorzugt 2 bis 20 Gewichts-%, bezogen auf das gesamte Polymer, verbleibt. Gegebenenfalls kann das Polyurethanpolymer unter Mitverwendung von Weichmachern oder Lösemitteln hergestellt werden, wobei die verwendeten Weichmacher oder Lösemittel keine gegenüber Isocyanaten reaktive Gruppen enthalten.
Das Isocyanatgruppen-haltige Polyurethanpolymer weist bevorzugt ein mittleres Molekulargewicht im Bereich von 350 bis 6'000 g/mol auf.
Als Polyisocyanat zur Herstellung eines Isocyanatgruppen-haltigen Polyurethanpolymers bevorzugt sind die genannten Diisocyanate, insbesondere MDI, TDI, IPDI, HDI oder H₁₂MDI, am meisten bevorzugt MDI.
Besonders bevorzugt basiert das Isocyanatgruppen-haltige Polyurethanpolymer auf dem gleichen Polyisocyanat, wie es in der zweiten Komponente schon vorhanden ist.
Geeignete Polyole sind insbesondere die als mögliche Bestandteil der ersten Komponente genannten Polyole, insbesondere die genannten hydrophoben Polyole mit einer mindestens 4 C-Atome aufweisenden Repetiereinheit.

Bevorzugt sind Polyole mit einem mittleren Molekulargewicht im Bereich von 500 bis 10'000 g/mol, insbesondere von 500 bis 6'000 g/mol.
Bevorzugt sind Polyole mit einer mittleren OH-Funktionalität im Bereich von 1.6 bis 3.
Bevorzugt sind bei Raumtemperatur flüssige Polyole.

Weiterhin kann die Zusammensetzung weitere Hilfs- und Zusatzstoffe enthalten. Diese können in der ersten oder in der zweiten oder in beiden Komponenten enthalten sein.

Bevorzugt enthält die Zusammensetzung mindestens einen Katalysator für die Aushärtung, insbesondere mindestens einen Katalysator für die Hydrolyse von Aldimingruppen und/oder mindestens einen Katalysator für die Reaktion von Isocyanatgruppen.
Bevorzugt enthält die Zusammensetzung sowohl mindestens einen Katalysator für die Hydrolyse von Aldimingruppen als auch mindestens einen Katalysator für die Reaktion von Isocyanatgruppen.

Geeignete Katalysatoren für die Hydrolyse von Aldimingruppen sind insbesondere organische Säuren, insbesondere Carbonsäuren wie 2-Ethylhexansäure, Laurinsäure, Stearinsäure, Isostearinsäure, Ölsäure, Neodecansäure, Benzoesäure, Salicylsäure oder 2-Nitrobenzoesäure, organische Carbonsäureanhydride wie Phthalsäureanhydrid, Hexahydrophthalsäureanhydrid oder Hexahydromethylphthalsäureanhydrid, Silylester von Carbonsäuren, organische Sulfonsäuren wie Methansulfonsäure, p-Toluolsulfonsäure oder 4-Dodecylbenzolsulfonsäure, Sulfonsäureester, andere organische oder anorganische Säuren, oder Mischungen der vorgenannten Säuren und Säureester. Besonders bevorzugt sind Carbonsäuren, insbesondere aromatische Carbonsäuren wie Benzoesäure, 2-Nitrobenzoesäure oder insbesondere Salicylsäure.

Geeignete Katalysatoren für die Reaktion von Isocyanatgruppen sind insbesondere Organozinn(IV)-Verbindungen wie insbesondere Dibutylzinndiacetat, Dibutylzinndilaurat, Dibutylzinndichlorid, Dibutylzinndiacetylacetonat, Dimethylzinndilaurat, Dioctylzinndiacetat, Dioctylzinndilaurat oder Dioctylzinndiacetylacetonat, Verbindungen von Eisen(III), Bismut(III) oder Zirkonium(IV), insbesondere Komplexverbindungen, oder Stickstoff-haltige Verbindungen wie insbesondere 1,4-Diazabicyclo[2.2.2]octan (DABCO), 1,8-Diazabicyclo[5.4.0]undec-7-en (DBU), 1,5-Diazabicyclo[4.3.0]non-5-en (DBN) oder monocyclische Amidine wie insbesondere Derivate von Imidazolin oder 1,4,5,6-tetrahydropyrimidin, insbesondere 1-(3-Dimethylaminopropyl)-2-methyl-1,4,5,6-tetrahydropyrimidin.

Bevorzugt enthält die Zusammensetzung mindestens eine Stickstoff-haltige Verbindung als Katalysator für die Aushärtung, insbesondere DABCO. Im Rahmen dieser Erfindung hat es sich gezeigt, dass die Verwendung einer Stickstoff-haltigen Verbindung als Katalysator, insbesondere DABCO, besonders hohe Festigkeiten ermöglicht, während mit Bi(III)- oder Zr(IV)-Katalysatoren reduzierte Festigkeit erhalten werden. Dies ist besonders überraschend, werden im Stand der Technik für zweikomponentige Polyurethanzusammensetzungen enthaltend Polyole und latente Härter besonders hohe Festigkeiten bei der Verwendung von Bi(III)- oder Zr(IV)-Katalysatoren beschrieben, während dort mit DABCO als Katalysator stark reduzierte Festigkeiten resultieren.

Am meisten bevorzugt enthält die Zusammensetzung eine Kombination aus Salicylsäure und DABCO.
Bevorzugt ist DABCO ein Bestandteil der ersten Komponente.

Bevorzugt enthält die Zusammensetzung weiterhin mindestens einen Füllstoff. Geeignete Füllstoffe sind insbesondere gemahlene oder gefällte Calciumcarbonate, welche gegebenenfalls mit Fettsäuren, insbesondere Stearaten, beschichtet sind, Baryte (Schwerspate), Quarzmehle, Quarzsande, Dolomite, Wollastonite, Kaoline, calcinierte Kaoline, Schichtsilikate wie Glimmer oder Talk, Zeolithe, Aluminiumhydroxide, Magnesiumhydroxide, Kieselsäuren inklusive hochdisperse Kieselsäuren aus Pyrolyseprozessen, Zemente, Gipse, Flugaschen, industriell hergestellte Russe, Graphit, Metall-Pulver, beispielsweise von Aluminium, Kupfer, Eisen, Silber oder Stahl, PVC-Pulver oder Hohlkugeln.

Die Zugabe von Füllstoffen ist dahingehend von Vorteil, dass dadurch die rheologischen Eigenschaften beeinflusst und die Festigkeit der Zusammensetzung erhöht werden können. Durch die Verwendung von Russ wird insbesondere auch die Standfestigkeit der Zusammensetzung erhöht, was bevorzugt ist. Bevorzugt ist industriell hergestellter Russ.
Der Anteil der Füllstoffe in der gesamten Zusammensetzung liegt bevorzugt im Bereich von 5 bis 60 Gewichts-%, besonders bevorzugt 5 bis 50 Gewichts-%, insbesondere 10 bis 45 Gewichts-%. Dabei liegt der Anteil von Russ bevorzugt im Bereich von 1 bis 15 Gewichts-%, insbesondere 5 bis 15 Gewichts-%.

Die Zusammensetzung kann weitere für Polyurethanzusammensetzungen gebräuchliche Hilfs- und Zusatzstoffe enthalten, insbesondere Pigmente, Weichmacher, Reaktivweichmacher, Fasern, Farbstoffe, Trocknungsmittel, Haftvermittler, weitere Katalysatoren, welche die Reaktion der Isocyanatgruppen beschleunigen, Rheologie-Modifizierer, insbesondere Verdickungsmittel, natürliche Harze, Fette oder Öle, nicht-reaktive Polymere, insbesondere Homo- oder Copolymere von ungesättigten Monomeren, flammhemmende Substanzen, Netzmittel, Verlaufmittel, Entschäumer, Entlüfter, Stabilisatoren gegen Oxidation, Wärme, Licht oder UV-Strahlung, Biozide, oder weitere üblicherweise in Polyurethanzusammensetzungen eingesetzte Substanzen.
Es kann sinnvoll sein, gewisse Substanzen vor dem Einmischen in die Zusammensetzung chemisch oder physikalisch zu trocknen.

Bevorzugt enthält die Zusammensetzung mindestens einen Haftvermittler, insbesondere ein Organoalkoxysilan, insbesondere ein Epoxysilan wie insbesondere 3-Glycidoxypropyltrimethoxysilan oder 3-Glycidoxypropyltriethoxysilan, ein (Meth)acrylosilan, Anhydridosilan, Carbamatosilan, Alkylsilan oder Iminosilan, oder oligomere Formen dieser Silane, oder ein Titanat.

Bevorzugt enthält die Zusammensetzung nur wenig Weichmacher, insbesondere weniger als 10 Gewichts-%, bevorzugt weniger als 5 Gewichts-%, besonders bevorzugt weniger als 1 Gewichts-%, Weichmacher. Somit kann eine Schwächung von Klebeverbindungen oder Abdichtungen durch aus der ausgehärteten Zusammensetzung migrierende Weichmacher weitgehend verhindert werden.

Bevorzugt enthält die erste Komponente der Zusammensetzung
- 30 bis 90 Gewichts-%, bevorzugt 40 bis 80 Gewichts-%, insbesondere 50 bis 70 Gewichts-%, Polyole mit einem mittleren Molekulargewicht von mindestens 500 g/mol und latente Härter,
- 10 bis 60 Gewichts-%, insbesondere 20 bis 50 Gewichts-%, Füllstoffe,
und gegebenenfalls weitere Bestandteile.

Eine besonders bevorzugte erste Komponente der Zusammensetzung enthält
- 40 bis 70 Gewichts-% Polybutadienpolyole mit einem mittleren Molekulargewicht im Bereich von 2'000 bis 10'000 g/mol und einer mittleren OH-Funktionalität im Bereich von 2.1 bis 4,
- 0.5 bis 10 Gewichts-% latente Härter,
- 20 bis 50 Gewichts-% Füllstoffe,
- Salicylsäure und/oder DABCO,
und gegebenenfalls weitere Bestandteile.

Bevorzugt enthält die zweite Komponente der Zusammensetzung 50 bis 100 Gewichts-%, bevorzugt 80 bis 100 Gewichts-%, insbesondere 90 bis 100 Gewichts-%, einer bei Raumtemperatur flüssigen Form von MDI.

Bevorzugt verfügt die Zusammensetzung nach der Aushärtung über eine Bruchdehnung im Bereich von 100% bis 500%, bevorzugt 130% bis 400%. Weiterhin bevorzugt verfügt die Zusammensetzung nach der Aushärtung über ein Elastizitätsmodul im Bereich von 0.5 bis 5% Dehnung im Bereich von 4 bis 8 MPa, insbesondere 4.5 bis 7 MPa.
Weiterhin bevorzugt verfügt die Zusammensetzung nach der Aushärtung über eine Glasübergangstemperatur unterhalb von -45°C, insbesondere unterhalb von -50 °C.

Besonders bevorzugt ist es, wenn die Zusammensetzung nach der Aushärtung in Bezug auf die Bruchdehnung, das Elastizitätsmodul und die Glasübergangstemperatur alle im Vorstehenden genannten Vorgaben erfüllt. Ein solches Material verfügt in besonderem Masse über die beschriebenen vorteilhaften Eigenschaften.

Die erste und die zweite Komponente der Zusammensetzung werden getrennt voneinander hergestellt. Dabei werden die Bestandteile der jeweiligen Komponente unter Ausschluss von Feuchtigkeit miteinander vermischt. Jede Komponente wird bis zur Verwendung der Zusammensetzung in einem separaten feuchtigkeitsdichten Gebinde gelagert. Ein geeignetes feuchtigkeitsdichtes Gebinde besteht insbesondere aus einem gegebenenfalls beschichteten Metall und/oder Kunststoff und ist insbesondere ein Fass, ein Container, ein Hobbock, ein Eimer, eine Büchse, ein Beutel, ein Schlauchbeutel, ein Kanister, eine Kartusche oder eine Tube. Jede Komponente ist für sich allein lagerstabil.

Zur Anwendung der Zusammensetzung werden die beiden Komponenten kurz vor oder während der Applikation mit einer geeigneten Methode miteinander vermischt. Das Mischungsverhältnis wird bevorzugt so gewählt, dass die gegenüber Isocyanaten reaktiven Gruppen in einem geeigneten Verhältnis zu den Isocyanatgruppen stehen.
Dabei liegt das Verhältnis der mit Isocyanaten reaktiven Gruppen, insbesondere Hydroxylgruppen, blockierte Aminogruppen wie insbesondere Aldimingruppen oder Oxazolidingruppen, und primäre und sekundäre Aminogruppen zu den Isocyanatgruppen bevorzugt im Bereich von 0.5 bis 1.2, besonders bevorzugt 0.7 bis 1.1, insbesondere 0.8 bis 1.0.
In Gewichtsteilen liegt das Mischungsverhältnis zwischen der ersten und der zweiten Komponente typischerweise im Bereich von etwa 1:1 bis 20:1, insbesondere 1:1 bis 15:1.
Das Vermischen der Komponenten erfolgt typischerweise über Statikmischer oder mit Hilfe von dynamischen Mischern, wobei die einzelnen Komponenten im richtigen Mischungsverhältnis vorkonfektioniert sein können, oder maschinell mittels einer Zweikomponenten-Dosieranlage. Das Vermischen kann kontinuierlich oder batchweise erfolgen. Beim Mischen ist darauf zu achten, dass die zwei Komponenten möglichst homogen vermischt werden. Bei einer unzureichenden Vermischung treten lokale Abweichungen vom vorteilhaften Mischungsverhältnis auf, was sich in einer Verschlechterung der mechanischen Eigenschaften und/oder Blasenbildung auswirken kann.
Das Vermischen erfolgt bevorzugt bei Umgebungstemperatur, insbesondere im Bereich von etwa 0 bis 50 °C, insbesondere 10 bis 40 °C.
Wird vor der Applikation vermischt, so wird darauf geachtet, dass zwischen dem Vermischen der Komponenten und der Applikation nicht zu viel Zeit vergeht, damit es nicht zu Störungen wie beispielsweise einem schlechten Verlauf oder einem verlangsamten oder unvollständigen Aufbau der Haftung zum Substrat kommt. Insbesondere soll die Offenzeit der Zusammensetzung während der Applikation nicht überschritten werden.
Die Zeit bis zur Ausbildung einer Haut ("Hautbildungszeit") bzw. bis zur Klebefreiheit ("tack-free time") stellt dabei ein Mass für die Offenzeit dar.

Mit dem Vermischen der beiden Komponenten beginnt der Prozess der Aushärtung. Als Ergebnis davon entsteht die ausgehärtete Zusammensetzung. Die Aushärtung kann bei Umgebungstemperatur und/oder bei erhöhter Temperatur erfolgen. Es hat sich gezeigt, dass die erfindungsgemässe Zusammensetzung überraschend robust ist in Bezug auf Aushärtung bei hohen Temperaturen, insbesondere im Bereich von 60 bis 130 °C, wobei typischerweise ein blasenfreies Material mit guten mechanischen Eigenschaften entsteht.
Bei der Aushärtung reagieren die Hydroxylgruppen und gegebenenfalls vorhandene primäre oder sekundäre Aminogruppen mit vorhandenen Isocyanatgruppen. Die blockierten Aminogruppen des latenten Härters reagieren unter dem Einfluss von Feuchtigkeit ebenfalls mit vorhandenen Isocyanatgruppen. Gegebenenfalls vorhandene weitere Isocyanatgruppen reagieren unter dem Einfluss von Feuchtigkeit untereinander. Die Gesamtheit dieser zur Aushärtung der Zusammensetzung führenden Reaktionen wird auch als Vernetzung bezeichnet.
Die zur Reaktion der blockierten Aminogruppen benötigte Feuchtigkeit kann, zumindest teilweise, in der Zusammensetzung vorhanden sein und/oder durch Diffusion aus der Umgebung, insbesondere aus der Luft (Luftfeuchtigkeit) oder aus den Substraten, in die Zusammensetzung gelangen. Weiterhin ist es möglich, der Zusammensetzung gezielt Feuchtigkeit von aussen zuzuführen, beispielsweise indem beim Vermischen der ersten und der zweiten Komponente eine weitere, Wasser enthaltende oder Wasser freisetzende Komponente zugegeben wird, oder indem das vermischte Material mit Feuchtigkeit oder Wasser in Kontakt gebracht wird, beispielsweise durch Besprühen.

Bei der Vernetzung wird unter dem Einfluss von Feuchtigkeit aus den blockierten Aminogruppen ein Aldehyd oder Keton freigesetzt, welches, abhängig von seiner Flüchtigkeit, in der Zusammensetzung verbleibt oder allmählich aus dieser herausdiffundiert. Aufgrund der geringen Menge latentem Härter in der Zusammensetzung handelt es sich dabei um eine vergleichsweise geringe Menge Aldehyd oder Keton, was in Bezug auf Schwund und/oder Migrationseffekte vorteilhaft ist. Für den bevorzugten Fall, dass als latenter Härter ein Aldimin der Formel (IV) vorhanden ist, wird bei der Vernetzung ein weitgehend unflüchtiger und geruchsarmer oder geruchsfreier Aldehyd der Formel 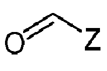 freigesetzt, insbesondere 4-Alkylbenzaldehyd, bei welchem Alkyl für einen verzweigten Decyl-, Undecyl-, Dodecyl-, Tridecyl- oder Tetradecyl-Rest steht, oder 2,2-Dimethyl-3-lauroyloxypropanal oder 2,2-Dimethyl-3-(N-morpholino)propanal, welcher zum grössten Teil in der ausgehärteten Zusammensetzung verbleibt und dort gut verträglich ist und sich wie ein Weichmacher verhält. Aufgrund der geringen Menge und der guten Verträglichkeit ist sein Einfluss gering. Insbesondere verursacht er keine oder nur in Zusammenhang mit nicht bevorzugten Inhaltsstoffen Spannungsrissbildung in Kombination mit glasigen thermoplastischen Kunststoffen wie Polycarbonat, Polymethylmethacrylat oder Polystyrol.

Die Zusammensetzung ist vorteilhaft verwendbar als Klebstoff oder Dichtstoff oder Vergussmasse.
Ein weiterer Gegenstand der vorliegenden Erfindung ist somit die Verwendung der beschriebenen Zusammensetzung als elastischer Klebstoff oder Dichtstoff, insbesondere zum Verkleben oder Abdichten von Kunststoffen, Kompositwerkstoffen oder Mischverklebungen zwischen Metallen und Kunststoffen in der Bau- und Fertigungsindustrie sowie im Fahrzeugbau, insbesondere für die Anbauteilverklebung, Montage, Karosserieverklebung, Modulverklebung, Scheibenverklebung, Scheinwerferverklebung, Nahtabdichtung oder Hohlraumversiegelung, wobei die beiden Komponenten vermischt werden und die vermischte Zusammensetzung auf mindestens ein Substrat aufgebracht und anschliessend, gegebenenfalls nach In-Kontaktbringen mit einem weiteren Substrat innerhalb der Offenzeit, aushärtet.

Ein weiterer Gegenstand der vorliegenden Erfindung ist ein Produkt aus der Verwendung der beschriebenen Zusammensetzung, welches nach der Aushärtung der Zusammensetzung erhalten wird.

Die Erfindung betrifft weiterhin ein Verfahren zum Verkleben von einem ersten Substrat mit einem zweiten Substrat, welches die Schritte umfasst:
- Mischen der vorstehend beschriebenen ersten und zweiten Komponente,
- Applizieren der vermischten Zusammensetzung auf mindestens eine der zu verklebenden Substratoberflächen, und
- Fügen der beiden Substrate innerhalb der Offenzeit der vermischten Zusammensetzung.

Dabei können die beiden Substrate aus dem gleichen oder einem unterschiedlichen Materialien bestehen.

Geeignete Substrate sind insbesondere
- Glas, Glaskeramik, Glasmineralfasermatten;
- Metalle oder Legierungen wie Aluminium, Kupfer, Eisen, Stahl, Buntmetalle, inklusive oberflächenveredelte Metalle oder Legierungen wie verzinkte oder verchromte Metalle;
- beschichtete oder lackierte Substrate, wie pulverbeschichtete Metalle oder Legierungen oder lackierte Bleche;
- Kunststoffe wie Hart- oder Weich-PVC, Polycarbonat, Polyester, Polystyrol, Polyamid, PMMA, ABS, SAN, Epoxidharze, Phenolharze, PUR, POM, TPO, PE, PP, EPM oder EPDM, jeweils unbehandelt oder oberflächenbehandelt, beispielsweise mittels Plasma, Corona oder Flammen;
- Faserverstärkte Kunststoffe, wie kohlefaserverstärkte Kunststoffe (CFK), glasfaserverstärkte Kunststoffe (GFK) oder Sheet Moulding Compounds (SMC);
- Holz, mit Harzen, beispielsweise Phenol-, Melamin- oder Epoxidharzen, gebundene Holzwerkstoffe, Harz-Textil-Verbundwerkstoffe oder weitere sogenannte Polymer-Composites, oder
- Beton, Mörtel, Faserzement, insbesondere Faserzement-Platten, Backstein, Ziegel, Gips, insbesondere Gips-Platten, oder Natursteine wie Granit, Kalkstein, Standstein oder Marmor.

Verklebt und/oder abgedichtet werden können zwei gleichartige oder zwei verschiedene Substrate.

In besagtem Verfahren ist eines oder beide Substrate bevorzugt ein Metall, eine Glaskeramik oder ein Glas, ein glasfaserverstärkter Kunststoff oder ein kohlefaserverstärkter Kunststoff, ein Thermoset auf Epoxybasis oder ein Polymersubtrat mit geringer Oberflächenenergie wie ein Polyolefin- Polymethylmethacrylat- oder Polycarbonat-Substrat.
Insbesondere ist eines oder beide Substrate ein Metall, eine Keramik, ein glasfaserverstärkter Kunststoff, ein kohlefaserverstärkter Kunststoff oder ein Polymersubtrat mit geringer Oberflächenenergie wie ein Polyolefin-, Polymethylmethacrylat- oder Polycarbonat-Substrat.
Besonders bevorzugt ist eines oder beide Substrate ein Metall, insbesondere Stahl, oder ein Polymersubstrat mit geringer Oberflächenenergie wie Polyolefin-, Polymethylmethacrylat- oder Polycarbonat.

Die Substrate können bei Bedarf vor dem Applizieren der Zusammensetzung vorbehandelt werden. Derartige Vorbehandlungen umfassen insbesondere physikalische und/oder chemische Reinigungsverfahren, sowie das Aufbringen eines Haftvermittlers, einer Haftvermittlerlösung oder eines Primers.

Die Erfindung betrifft ferner ein Verfahren zum Abdichten, insbesondere von Fugen und Spalten, welches die Schritte umfasst:
- Mischen der vorstehend beschriebenen ersten und zweiten Komponente,
- Applizieren der vermischten Zusammensetzung auf ein Substrat oder zwischen zwei Substrate innerhalb der Offenzeit der vermischten Zusammensetzung.

In diesen Verfahren zum Abdichten sind die im Vorstehenden für das Verfahren zum Verkleben erwähnten Substrate besonders geeignet.

Besonders bevorzugt ist im Verfahren zum Verkleben oder im Verfahren zum Abdichten mindestens eines der Substrate ein glasiger thermoplastischer Kunststoff ausgewählt aus der Gruppe bestehend aus Polycarbonat, Polymethylmethacrylat und Polystyrol. Dabei neigt dieses Substrat besonders wenig oder gar nicht zu Spannungsrissen.

Die beschriebene Zusammensetzung ist ebenfalls vorteilhaft verwendbar als Vergussmasse.

Die beschriebene Zusammensetzung zeichnet sich durch eine hohe Festigkeit und Elastizität, welche über einen weiten Temperaturbereich von etwa -40 bis 90 °C relativ konstant ist, und über gute, weitgehend temperaturunabhängige Haftungseigenschaften auf metallischen und nichtmetallischen Substraten aus. Aufgrund dieser Eigenschaften ist sie besonders geeignet als elastischer Klebstoff für Verklebungen, welche im Freien beansprucht werden.
Durch den hohen Anteil an Polybutadienpolyol ist die ausgehärtete Zusammensetzung sehr hydrophob und wasserabweisend. Dies kann einen hohen Wasserdampfdiffusionswiderstand des Materials begünstigen. Dadurch ist die Zusammensetzung insbesondere auch geeignet für Verklebungen oder als Vergussmasse, bei denen auf Wasserdampf empfindliche Komponenten, beispielsweise elektronische Bauteile oder Scheinwerfer, klebend abgedichtet werden sollen.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" wird eine Temperatur von 23±1 °C und eine relative Luftfeuchtigkeit von 50±5% bezeichnet.

**1. Verwendete kommerzielle Substanzen:**

| | |
|---|---|
| Poly bd^{®} R45 | Polybutadienpolyol, OH-Funktionalität ca. 2.5, mittleres Molekulargewicht ca. 2800 g/mol, OH-Zahl 47.1 mg KOH/g (Poly bd^{®} R-45HTLO von Cray Valley) |
| Kuraray P2010 | Polyesterdiol, mittleres Molekulargewicht ca. 2000 g/mol, OH-Zahl 56 mg KOH/g (Kuraray P-2010 von Kuraray) |
| Voranol^{®} CP 4755 | EO-endcapped Polyoxypropylentriol, OH-Zahl 35 mg KOH/g (von Dow) |
| Füllstoff | Mineralischer Füllstoff auf Basis von Calciumcarbonat (Winnofil^{®} SPT von Solvay) |
| Russ | Monarch^{®} 120 (von Cabot) |
| DABCO | 1,4-Diazabicyclo[2.2.2]octan, 33 Gewichts-% in Dipropylenglykol (DABCO 33 LV^{®} von Air Products) |
| Zr-Katalysator | Zirkonium(IV)-Chelat-Komplex in Reaktivverdünner und tert.Butylacetat, Zirkonium-Gehalt 3.5 Gewichts-% (K-Kat^{®} A-209 von King Industries) |
| Salicylsäure 5% | 5 Gewichts-% Salicylsäure in Dioctyladipat |
| Polyisocyanat | Modifiziertes Diphenylmethandiisocyanat enthaltend MDI-Carbodiimid-Addukte, bei Raumemperatur flüssig, NCO-Gehalt 29.4 Gewichts-% (Isonate^{®} M 143 von Dow) |

### 2. Herstellung von Substanzen:

Der **Amingehalt** (totaler Gehalt von freien und blockierten Aminogruppen inklusive Aldiminogruppen) wurde bestimmt mittels Titration (mit 0.1 N HClO₄ in Essigsäure gegen Kristallviolett) und ist angegeben in mmol N/g.

**Aldimin-1:** N,N'-Bis(2,2-dimethyl-3-lauroyloxypropyliden)hexamethylen-1,6-diamin

622 g 2,2-Dimethyl-3-lauroyloxypropanal wurden in einem Rundkolben unter Stickstoffatmosphäre vorgelegt. Unter Rühren wurden 166.0 g Hexamethylen-1,6-diamin-Lösung (70 Gewichts-% in Wasser) zugegeben und anschliessend die flüchtigen Bestandteile bei 80 °C und 10 mbar Vakuum entfernt. Es wurden 702 g einer fast farblosen Flüssigkeit mit einem Amingehalt von 2.85 mmol N/g, was einem berechneten Aldimin-Equivalentgewicht von ca. 350 g/Eq entspricht, erhalten.

**Aldimin-2:** N,N'-Bis(2,2-dimethyl-3-(N-morpholino)propyliden)hexamethylen-1,6-diamin

359.5 g 2,2-Dimethyl-3-(N-morpholino)propanal wurden in einem Rundkolben unter Stickstoffatmosphäre vorgelegt. Unter Rühren wurden 166.0 g Hexamethylen-1,6-diamin-Lösung (70 Gewichts-%in Wasser) zugegeben und anschliessend die flüchtigen Bestandteile bei 80 °C und 10 mbar Vakuum entfernt. Es wurden 439.1 g einer fast farblosen Flüssigkeit mit einem Amingehalt von 9.27 mmol N/g, was einem berechneten Aldimin-Equivalentgewicht von ca. 220 g/Eq entspricht, erhalten.

**Amidin-Katalysator:** 1-(3-Dimethylaminopropyl)-2-methyl-1,4,5,6-tetrahydro-pyrimidin

In einem Rundkolben wurden 131.63 g Ethylacetoacetat in 50 ml Toluol vorgelegt und unter Rühren und Kühlung langsam 161.09 g N¹-((3-Dimethylamino)-propyl)-1,3-diaminopropan (von BASF) zugetropft, wobei die Temperatur bei 20 bis 30 °C gehalten wurde. Darauf wurde das Azeotrop aus Toluol und Wasser bei 40 °C und 10 mbar mittels Destillation aus der Reaktionsmischung entfernt, anschliessend restliches Toluol und Ethylacetat mittels Destillation bei Normaldruck entfernt und der Rückstand im Vakuum destilliert. Man erhielt 168.74 g eines gelblichen Öls mit einer Siedetemperatur von 95-105 °C bei 0.6 mbar.

### 3. Herstellung von Polyurethan-Klebstoffen:

### Beispiele K-1 bis K-12 und Ref.1 bis Ref.4

Für jedes Beispiel wurden die in den Tabellen 1 bis 3 angegebenen Inhaltsstoffe in den angegebenen Mengen (in Gewichtsteilen) der ersten Komponente ("Komponente-1") mittels eines Zentrifugalmischers (SpeedMixer™ DAC 150, FlackTek Inc.) unter Feuchtigkeitsausschluss zu einer homogenen Paste verarbeitet und aufbewahrt. Als zweite Komponente ("Komponente-2") wurde die in den Tabellen 1 und 2 angegebene Menge (in Gewichtsteilen) Polyisocyanat eingesetzt. Die beiden Komponenten wurden mittels des Zentrifugalmischers unter Feuchtigkeitsausschluss zu einer homogenen Paste verarbeitet und diese unverzüglich folgendermassen geprüft:
Als Mass für die Offenzeit wurde die Zeit bis zur Klebefreiheit ("**tack-free time**") bestimmt. Dazu wurden einige Gramm des Klebstoffs in einer Schichtdicke von ca. 2 mm auf Pappkarton aufgetragen und im Normklima die Zeitdauer bestimmt, bis beim leichten Antippen der Oberfläche des Klebstoffs mittels einer Pipette aus LDPE erstmals keine Rückstände auf der Pipette mehr zurückblieben.

Zur Bestimmung der mechanischen Eigenschaften wurde der Klebstoff in Hantelform gemäß ISO 527, Teil 2, 1 B, gebracht und während 24 h bei 23°C und anschließend während 3 h bei 80°C gelagert bzw. ausgehärtet. Nach einer Konditionierungszeit von 24 h wurden die **Zugfestigkeit,** die **Bruchdehnung** und das Elastizitätsmodul bei 0.5-5 % Dehnung (" **E-Modul**") der so hergestellten Probekörper gemäß ISO 527 auf einer Zwick Z020 Zugprüfmaschine bei einer Prüfgeschwindigkeit von 200 mm/ min gemessen. Dabei dienen die Werte des E-Moduls als Mass für die Festigkeit des Klebstoffs.

Zur Messung der Zugscherfestigkeit (Lap Shear Strength, kurz LSS) wurden diverse Prüfkörper hergestellt, wobei der Klebstoff jeweils 1 Minute nach Abschluss der Mischzeit zwischen zwei mit Heptan entfetteten KTL-lackierten Stahlblechen ("**LSS e-coat")** oder mit Isopropanol entfetten Platten aus Polycarbonat (Makrolon^{®}) ("**LSS *Polycarb*.")** in einer Schichtdicke von 1.6 mm und auf einer überlappenden Klebefläche von 15 x 45 mm aufgebracht wurde. Die Prüfkörper wurden während 24 h im Normklima und anschließend während 3h bei 80°C gelagert bzw. ausgehärtet. Nach einer Konditionierungszeit von 24h im Normklima wurde die Zugscherfestigkeit nach DIN EN 1465 mit einer Zuggeschwindigkeit von 10 mm/min bestimmt.

Zur Bestimmung, ob verklebte Prüfkörper aus Polycarbonat zu Spannungsrissbildung (environmental stress cracking, kurz ESC) neigen, wurden weitere Prüfkörper hergestellt. Dazu wurde eine mit Isopropanol entfette Platte aus Polycarbonat mit den Massen 150 x 30 mm mit einem während 7 Tagen im Normklima ausgehärteten Film mit einer Fläche von 30 x 30 mm und einer Dicke von 2 mm, so belegt, dass der ausgehärtete Film in die Mitte der Polycarbonatplatte zu liegen kam und von Hand gut angedrückt wurde. Mehrere solche Prüfkörper wurden dann quer über ein auf einem Brett angebrachtes Rundholz mit einem Durchmesser von 35 mm gespannt und an den Enden so befestigt, dass jeder Prüfkörper in gebogener Stellung fixiert war. Diese Anordnung wurde 24 h in einem Umluftofen bei 80 °C gelagert und anschliessend optisch beurteilt, ob im Polycarbonat Risse sichtbar waren. Falls dabei im Polycarbonat keine Risse auftraten, wurde "**ESC**?" mit "nein", andernfalls mit "ja", beurteilt.

Die **Glasübergangstemperatur,** in den Tabellen abgekürzt mit **T_{g},** wurde bestimmt anhand von DMTA-Messungen an streifenförmigen Proben (Höhe 2-3 mm, Breite 2-3 mm, Länge 8.5 mm), welche während 24 h bei 23°C und anschließend während 3h bei 80°C gelagert bzw. ausgehärtet wurden, mit einem Mettler DMA/SDTA 861 e Gerät. Die Messbedingungen waren: Messung im Zugmodus, 10 Hz Anregungsfrequenz und Aufheizrate 5 K/min. Die Proben wurden auf -70 °C abgekühlt und unter Bestimmung des komplexen Elastizitätsmoduls **M*** [MPa] auf 200 °C erwärmt, wobei ein Maximum in der Kurve für den Verlustwinkel "tan δ" als T_{g}-Wert abgelesen wurde.

Als **"Verhältnis Aldimin/OH"** wurde in den Tabellen 1 bis 3 das Verhältnis der Anzahl Aldimingruppen zur Anzahl OH-Gruppen im Klebstoff bezeichnet.

Die Resultate sind in den Tabellen 1 bis 3 angegeben.

Zur Bestimmung der Lagerstabilität bzw. der Alterungsbeständigkeit bzw. des Verhaltens bei Aushärtung in der Hitze wurden für einige der Beispiele weitere Prüfkörper zur Bestimmung der mechanischen Eigenschaften und teilweise der Zugscherfestigkeit hergestellt. Diese Resultate sind in der Tabelle 4 angegeben.

Zur Bestimmung der Lagerstabilität der ersten Komponente wurde diese in einem feuchtigkeitsdichten Gebinde während 7 Tage bei 60 °C aufbewahrt bevor sie zur Herstellung der Prüfkörper eingesetzt wurde. Diese Werte sind in der Tabelle 4 mit **"Komp.-1 gealtert"** bezeichnet.

Zur Bestimmung der Alterungsbeständigkeit wurden weitere Prüfkörper, welche wie vorgängig beschrieben ausgehärtet bzw. gelagert waren, vor der Prüfung zusätzlich während 7 Tagen bei 70 °C und 100 % relativer Luftfeuchtigkeit gelagert und anschliessend während 24h im Normklima konditioniert. Diese Werte sind in der Tabelle 4 mit "+ **7d 70°C/100% rH"** bezeichnet.

Zur Bestimmung des Verhaltens bei Aushärtung in der Hitze wurden weitere Prüfkörper zur Bestimmung der mechanischen Eigenschaften hergestellt, welche in einem Umluftofen bei 80 bzw.100 bzw. 130 °C während 3h ausgehärtet bzw. gelagert und anschliessend während 24h im Normklima konditioniert wurden. Diese Werte sind in der Tabelle 4 mit **"Aushärtung 3h 100°C"** bzw. **"Aushärtung 3h 100°C"** bzw. **"Aushärtung 3h 100°C"** bezeichnet.

Alle hergestellten Prüfkörper waren optisch einwandfrei, mit nicht-klebriger Oberfläche und frei von Blasen.

Bei den Beispielen **K-1** bis **K-12** handelt es sich um erfindungsgemässe Klebstoffe. Bei den Beispielen **Ref.1** bis **Ref.4** handelt es sich um Vergleichsbeispiele.

**Tabelle 1**

| **Beispiel** | **Ref.1** | **K-1** | **K-2** | **K-3** | **K-4** | **K-5** | **Ref.2** |
|---|---|---|---|---|---|---|---|
| **Komponente-1:** | | | | | | | |
| Poly bd^{®} R45 | 60.00 | 60.00 | 60.00 | 60.00 | 60.00 | 60.00 | 60.00 |
| Aldimin-1 | - | 1.20 | 2.00 | 4.80 | - | - | 9.00 |
| Aldimin-2 | - | - | - | - | 0.70 | 3.00 | |
| Füllstoff | 20.00 | 20.00 | 20.00 | 20.00 | 20.00 | 20.00 | 20.00 |
| Russ | 10.00 | 10.00 | 10.00 | 10.00 | 10.00 | 10.00 | 10.00 |
| DABCO | 0.10 | 0.10 | 0.10 | 0.10 | 0.10 | 0.10 | 0.10 |
| Salicylsäure 5% | 0.20 | 0.20 | 0.20 | 0.20 | 0.20 | 0.20 | 0.20 |

| **Komponente-2:** | | | | | | | |
|---|---|---|---|---|---|---|---|
| Polyisocyanat | 8.03 | 8.65 | 9.09 | 10.57 | 8.52 | 10.18 | 12.18 |
| Verhältnis Aldimin/OH | - | 0.07 | 0.11 | 0.27 | 0.06 | 0.27 | 0.51 |
| tack-free time [min.] | 18 | 15 | 15 | 13 | 10 | 10 | 18 |
| LSS *e-coat* [MPa] | 2.9 | 2.9 | 3.2 | 3.3 | 3.0 | 3.6 | 3.5 |
| LSS *Polycarb.* [MPa] ESC? | 1.8 nein | 1.8 nein | 1.4 nein | 1.3 nein | 1.4 nein | 0.9 nein | 1.2 nein |
| Zugfestigkeit [MPa] | 3.7 | 3.3 | 3.4 | 4.2 | 3.7 | 4.3 | 3.2 |
| Bruchdehnung [%] | 233 | 201 | 193 | 185 | 198 | 148 | 97 |
| E-Modul [MPa] | 3.6 | 5.0 | 5.3 | 5.7 | 5.0 | 6.3 | 5.9 |
| T_{g} [°C] | -54 | -53 | -54 | -54 | -55 | -54 | -52 |

**Tabelle 2**

| **Beispiel** | **Ref.3** | **K-6** | **K-7** | **K-8** | **K-9** |
|---|---|---|---|---|---|
| **Komponente-1:** | | | | | |
| Poly bd^{®} R45 | 60.00 | 60.00 | 60.00 | 60.00 | 60.00 |
| Kuraray P2010 | 10.0 | 10.0 | 10.0 | 10.0 | 10.0 |
| Aldimin-1 | - | 2.00 | 4.80 | - | - |
| Aldimin-2 | - | - | - | 0.70 | 3.00 |
| Füllstoff | 20.00 | 20.00 | 20.00 | 20.00 | 20.00 |
| Russ | 10.00 | 10.00 | 10.00 | 10.00 | 10.00 |
| DABCO | 0.10 | 0.10 | 0.10 | 0.10 | 0.10 |
| Salicylsäure 5% | 0.20 | 0.20 | 0.20 | 0.20 | 0.20 |

| **Komponente-2:** | | | | | |
|---|---|---|---|---|---|
| Polyisocyanat | 9.20 | 10.10 | 11.35 | 10.20 | 11.63 |
| Verhältnis Aldimin/OH | - | 0.09 | 0.23 | 0.05 | 0.23 |
| tack-free time [min.] | 15 | 23 | 20 | 12 | 7 |
| LSS *e-coat* [MPa] | 2.9 | 2.7 | 2.7 | 2.8 | 2.7 |
| LSS *Polycarb*. [MPa] ESC? | 2.5 nein | 2.7 nein | 2.5 nein | 2.8 nein | 2.9 nein |
| Zugfestigkeit [MPa] | 3.7 | 3.7 | 3.4 | 4.0 | 3.7 |
| Bruchdehnung [%] | 275 | 233 | 212 | 207 | 141 |
| E-Modul [MPa] | 3.6 | 4.4 | 4.2 | 4.9 | 4.5 |
| T_{g} [°C] | -55 | -54 | -52 | -54 | -52 |

**Tabelle 3 "n.b." steht für "nicht bestimmt"**

| **Beispiel** | **K-10** | **K-11** | **K-12** | **Ref.4₀** |
|---|---|---|---|---|
| **Komponente-1:** | | | | |
| Poly bd^{®} R45 | 60.00 | 60.00 | 60.00 | 30.00 |
| Voranol^{®} CP 4755 | - | - | - | 30.00 |
| Aldimin-1 | 2.00 | 3.00 | 2.00 | 1.20 |
| Aldimin-2 | - | | - | - |
| Aldimin-3 | - | | - | - |
| Füllstoff | 20.00 | 20.00 | 20.00 | 20.00 |
| Russ | 10.00 | 10.00 | 10.00 | 10.00 |
| Amidin-Katalysator | 0.20 | 0.20 | - | - |
| Zr-Katalysator | - | - | 0.04 | 0.04 |
| Salicylsäure 5% | 0.20 | 0.20 | 0.20 | 0.20 |

| **Komponente-2:** | | | | |
|---|---|---|---|---|
| Polyisocyanat | 9.09 | 10.18 | 9.00 | 7.44 |
| Verhältnis Aldimin/OH | 0.11 | 0.27 | 0.11 | 0.08 |
| tack-free time [min.] | 8 | 5 | n.b. | 50 |
| LSS KTL [MPa] | 3.7 | 4.0 | 2.1 | 2.7 |
| LSS Polycarb. [MPa] ESC? | 1.4 nein | 1.3 nein | n.b. | n.b. |
| Zugfestigkeit [MPa] | 4.5 | 3.9 | 3.4 | 2.7 |
| Bruchdehnung [%] | 212 | 118 | 253 | 208 |
| E-Modul [MPa] | 5.3 | 6.8 | 3.7 | 3.3 |
| T_{g} [°C] | -55 | -54 | -53 | -37 |

**Tabelle 4**

| **Beispiel** | **Ref.1** | **K-2** | **K-3** | **K-4** | **K-5** | **Ref.2** |
|---|---|---|---|---|---|---|
| **Komp.-1 gealtert:** | | | | | | |
| LSS KTL [MPa] | 3.1 | 3.4 | 3.8 | 3.4 | 4.2 | n.b. |
| LSS Polycarb. [MPa] | 2.3 | 1.4 | 1.9 | 1.6 | 1.4 | n.b. |
| ESC? | nein | nein | nein | nein | nein | |
| Zugfestigkeit [MPa] | 3.9 | 3.6 | 3.5 | 2.8 | 3.7 | n.b. |
| Bruchdehnung [%] | 203 | 147 | 108 | 115 | 117 | n.b. |
| E-Modul [MPa] | 4.9 | 5.9 | 6.4 | 5.5 | 6.6 | n.b. |

| **+ 7d 70°C/100% rH:** | | | | | | |
|---|---|---|---|---|---|---|
| LSS KTL [MPa] | 3.5 | 3.3 | 3.8 | 3.5 | 4.4 | n.b. |
| LSS Polycarb. [MPa] | 1.0 | 1.7 | 1.3 | 1.1 | 1.1 | n.b. |
| Zugfestigkeit [MPa] | 3.9 | 3.4 | 4.1 | 4.5 | 4.2 | n.b. |
| Bruchdehnung [%] | 240 | 149 | 135 | 148 | 218 | n.b. |
| E-Modul [MPa] | 4.0 | 5.6 | 7.1 | 4.5 | 4.8 | n.b. |

| **Aushärtung 3h 80°C:** | | | | | | |
|---|---|---|---|---|---|---|
| Zugfestigkeit [MPa] | 3.1 | 3.1 | 3.3 | 3.5 | n.b. | 2.0 |
| Bruchdehnung [%] | 231 | 157 | 153 | 201 | n.b. | 86 |
| E-Modul [MPa] | 4.0 | 5.2 | 5.2 | 4.9 | n.b. | 4.0 |
| **Aushärtung 3h 100°C:** | | | | | | |
| Zugfestigkeit [MPa] | 3.2 | 3.3 | 3.4 | 3.5 | n.b. | 2.8 |
| Bruchdehnung [%] | 238 | 163 | 112 | 183 | n.b. | 65 |
| E-Modul [MPa] | 4.1 | 5.4 | 6.5 | 5.2 | n.b. | 6.9 |

| **Aushärtung 3h 130°C:** | | | | | | |
|---|---|---|---|---|---|---|
| Zugfestigkeit [MPa] | 3.0 | 3.7 | n.b. | 3.5 | n.b. | n.b. |
| Bruchdehnung [%] | 183 | 157 | n.b. | 186 | n.b. | n.b. |
| E-Modul [MPa] | 4.3 | 5.5 | n.b. | 4.7 | n.b. | n.b. |

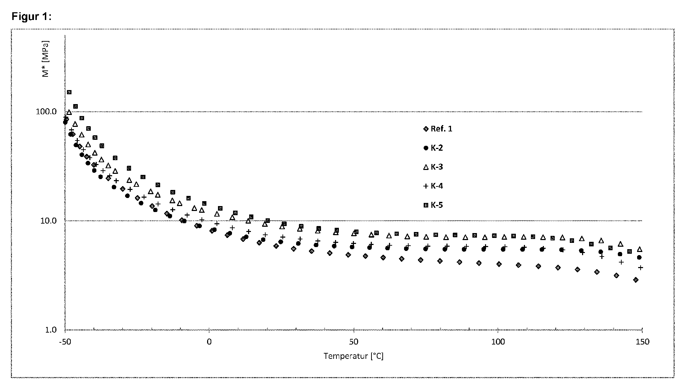

In Figur 1 ist der Verlauf des komplexen Elastizitätsmoduls M* in Abhängigkeit der Temperatur der Beispiele **Ref.1, K-2, K-3, K-4** und **K-5** dargestellt, bestimmt mittels DMTA wie vorgängig beschrieben. Die Darstellung dient als Mass für die Konstanz der mechanischen Eigenschaften über die Temperatur, wobei ein flacher Kurvenverlauf für eine hohe Konstanz steht.

Aus dem Kurvenverlauf ist ersichtlich, dass die erfindungsgemässen Beispiele **K-2** bis **K-5** eine höhere Festigkeit und eine geringere Temperaturabhängigkeit der Festigkeit über den dargestellten Temperaturbereich, insbesondere im Bereich von -40 bis 90 °C, aufweisen als das Vergleichsbeispiel **Ref.1.**

## Patentansprüche

1. Zusammensetzung bestehend aus
- einer ersten Komponente enthaltend mindestens 55 Gewichts-% Polybutadienpolyole mit einem mittleren Molekulargewicht im Bereich von 2'000 bis 10'000 g/mol und einer mittleren OH-Funktionalität im Bereich von 2.1 bis 4 bezogen auf die Gesamtmenge aller Polyole mit einem mittleren Molekulargewicht von mindestens 500 g/mol, und
- einer zweiten Komponente enthaltend mindestens ein Polyisocyanat, wobei mindestens eine der beiden Komponenten zusätzlich mindestens einen latenten Härter enthält,
**dadurch gekennzeichnet, dass** das Verhältnis der Anzahl Reaktivgruppen des latenten Härters zur Anzahl der vorhandenen OH-Gruppen im Bereich von 0.02 bis 0.4 liegt.

2. Zusammensetzung gemäss Anspruch 1, **dadurch gekennzeichnet, dass** das Polyisocyanat 4,4'- oder 2,4'- oder 2,2'-Diphenylmethandiisocyanat oder ein beliebiges Gemisch dieser Isomeren enthält.

3. Zusammensetzung gemäss Anspruch 1 oder 2, **dadurch gekennzeichnet, dass** der latente Härter ein blockiertes Amin ist, welches eine blockierte, hydrolytisch aktivierbare Aminogruppe und mindestens eine weitere Reaktivgruppe ausgewählt aus der Gruppe bestehend aus Hydroxylgruppe, Mercaptogruppe, sekundärer Aminogruppe, primärer Aminogruppe und blockierter, hydrolytisch aktivierbarer Aminogruppe aufweist.

4. Zusammensetzung gemäss einem der Ansprüche 1 bis 3, **dadurch gekennzeichnet, dass** der latenter Härter ein Aldimin der Formel (IV) ist, 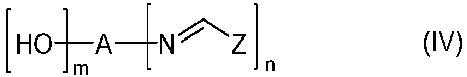 wobei
m für 0 oder 1 und n für eine ganze Zahl von 1 bis 3 steht, wobei (m+n) für 2 oder 3 steht,
A für einen (m+n)-wertigen, gegebenenfalls Ether-Sauerstoff aufweisenden Kohlenwasserstoff-Rest mit 2 bis 20 C-Atomen steht, und
Z für einen gegebenenfalls substituierten aromatischen Rest oder für einen Rest der Formel 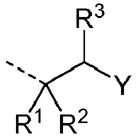 steht, wobei
R¹ und R² unabhängig voneinander jeweils für einen einwertigen Kohlenwasserstoff-Rest mit 1 bis 12 C-Atomen stehen, oder zusammen für einen zweiwertigen Kohlenwasserstoff-Rest mit 4 bis 12 C-Atomen stehen, welcher Teil eines, gegebenenfalls substituierten, carbocyclischen Rings mit 5 bis 8, bevorzugt 6, C-Atomen ist,
R³ für ein Wasserstoffatom oder für einen Alkyl- oder Arylalkyl- oder Alkoxycarbonyl-Rest mit 1 bis 12 C-Atomen steht, und Y für 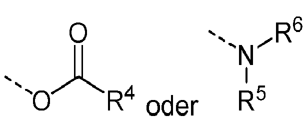 steht, wobei
R⁴ für einen einwertigen, gegebenenfalls Ether- oder Aldehyd-Einheiten enthaltenden Kohlenwasserstoff-Rest mit 6 bis 20 C-Atomen steht, und
R⁵ und R⁶ unabhängig voneinander jeweils für einen einwertigen, gegebenenfalls Heteroatome in der Form von Hydroxylgruppen oder Ether-Sauerstoff enthaltenden, aliphatischen, cycloaliphatischen oder arylaliphatischen Kohlenwasserstoff-Rest mit 2 bis 20 C-Atomen, oder zusammen für einen zweiwertigen aliphatischen Rest mit 4 bis 12 C-Atomen, der Teil eines, gegebenenfalls substituierten, heterocyclischen Rings mit 5 bis 8, bevorzugt 6, Ringatomen ist und neben dem Stickstoffatom gegebenenfalls weitere Heteroatome in der Form von Ether-Sauerstoff, Thioether-Schwefel oder tertiärem Amin-Stickstoff enthält, stehen.

5. Zusammensetzung gemäss Anspruch 4, **dadurch gekennzeichnet, dass** Z für einen mit einer verzweigten Alkylgruppe mit 10 bis 14 C-Atomen substituierten Phenyl-Rest steht.

6. Zusammensetzung gemäss Anspruch 4, **dadurch gekennzeichnet, dass** Z für einen Rest der Formel 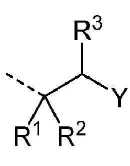 steht, wobei R¹ und R² jeweils für
einen Methyl-Rest, R³ für einen Wasserstoff-Rest, Y für 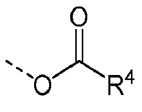 und
R⁴ für einen linearen Alkylrest mit 11 C-Atomen stehen.

7. Zusammensetzung gemäss Anspruch 4, **dadurch gekennzeichnet, dass** Z für einen Rest der Formel 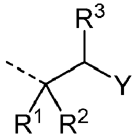 steht, wobei R¹ und R² jeweils für
einen Methyl-Rest, R³ für einen Wasserstoff-Rest, Y für 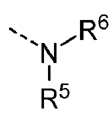 und R⁵
und R⁶ zusammen für einen 3-Oxa-1,5-pentylen-Rest, welcher zusammen mit dem Stickstoffatom einen Morpholin-Ring bildet, stehen.

8. Zusammensetzung gemäss Anspruch 4, **dadurch gekennzeichnet, dass** Z für einen Rest der Formel 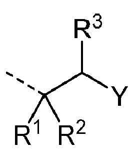 steht, wobei R¹ und R² jeweils für
einen Methyl-Rest, R³ für einen Wasserstoff-Rest, Y für 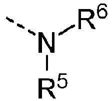 und R⁵
und R⁶ jeweils für 2-Hydroxyethyl oder 2-Hydroxypropyl stehen.

9. Zusammensetzung gemäss einem der Ansprüche 1 bis 8, **dadurch gekennzeichnet, dass** sie mindestens eine Stickstoff-haltige Verbindung als Katalysator für die Aushärtung enthält, insbesondere 1,4-Diazabicyclo-[2.2.2]octan.

10. Zusammensetzung gemäss einem der Ansprüche 1 bis 9, **dadurch gekennzeichnet, dass** ihre Glasübergangstemperatur unterhalb von -45°C, insbesondere unterhalb von -50 °C, liegt.

11. Verwendung der Zusammensetzung gemäss einem der Ansprüche 1 bis 10 als elastischer Klebstoff oder Dichtstoff.

12. Produkt aus der Verwendung gemäss Anspruch 11, welches nach der Aushärtung der Zusammensetzung erhalten wird.

13. Verfahren zum Verkleben von einem ersten Substrat mit einem zweiten Substrat, welches die Schritte umfasst:
- Mischen der ersten und zweiten Komponente der Zusammensetzung gemäss einem der Ansprüche 1 bis 10,
- Applizieren der vermischten Zusammensetzung auf mindestens eine der zu verklebenden Substratoberflächen, und
- Fügen der beiden Substrate innerhalb der Offenzeit der vermischten Zusammensetzung.

14. Verfahren zum Abdichten, welches die Schritte umfasst:
- Mischen der ersten und zweiten Komponente der Zusammensetzung gemäss einem der Ansprüche 1 bis 10,
- Applizieren der vermischten Zusammensetzung auf ein Substrat oder zwischen zwei Substrate innerhalb der Offenzeit der vermischten Zusammensetzung.

15. Verfahren gemäss einem der Ansprüche 13 oder 14, **dadurch gekennzeichnet, dass** mindestens eines der Substrate ein glasiger thermoplastischer Kunststoff ausgewählt aus der Gruppe bestehend aus Polycarbonat, Polymethylmethacrylat und Polystyrol ist.
